# EUROPÄISCHE PATENTSCHRIFT

(11) **EP 3 485 473 B1**
(45) Veröffentlichungstag und Bekanntmachung des Hinweises auf die Patenterteilung: **31.08.2022**
(21) Anmeldenummer: 17731869.8
(22) Anmeldetag: 19.06.2017
(51) Int. Cl.: G08B 17/00, G08B 29/18, G08B 29/14, B64C 39/02

(54) **VERFAHREN UND UNBEMANNTES FAHRZEUG ZUR ÜBERPRÜFUNG VON BRANDSCHUTZKOMPONENTEN**
METHOD AND UNMANNED VEHICLE FOR TESTING FIRE PROTECTION COMPONENTS
PROCÉDÉ ET VÉHICULE SANS CONDUCTEUR POUR LA VÉRIFICATION D'ÉLÉMENTS DE PROTECTION CONTRE L'INCENDIE

(30) Priorität: 12.07.2016 DE 102016212643; 14.03.2017 DE 102017204261
(43) Veröffentlichungstag der Anmeldung: 22.05.2019
(73) Patentinhaber: Minimax GmbH, 23843 Bad Oldesloe (DE)
(72) Erfinder: JEGODTKA, Thomas, 24558 Henstedt-Ulzburg (DE)
(74) Vertreter: Eisenführ Speiser
(86) Internationale Anmeldenummer: PCT/EP2017/064948
(87) Internationale Veröffentlichungsnummer: WO 2018/010915

(56) Entgegenhaltungen:
- WO-A1-2017/093839
- DE-A1-102012 003 190
- DE-A1-102012 003 190
- US-A1- 2015 246 727
- US-A1- 2015 246 727

## Beschreibung

Die Erfindung betrifft ein Verfahren zur Überprüfung einer Brandschutzkomponente einer Brandschutzanlage, ein unbemanntes Fahrzeug zur Überprüfung einer Brandschutzkomponente einer Brandschutzanlage sowie ein Brandschutzsystem.

Aus dem Stand der Technik sind Brandschutzanlagen unterschiedlicher Ausprägung, bekannt. In der Ausgestaltung als Brandmeldeanlagen, welche als Brandschutzkomponenten beispielsweise Brandmelder, Alarmmittel und eine Zentrale umfassen, dient diese Art der Brandschutzanlage zur frühzeitigen Erkennung eines Brandes, um nach einer Branddetektion Gegenmaßnahmen, wie beispielsweise die Alarmierung der Feuerwehr und Einleitung der Personenevakuierung einzuleiten.

In der Ausgestaltung der Brandschutzanlage als Löschanlage dient die Brandschutzanlage zur Löschung des Brandes. In einer kombinierten Brandmelde- und Löschanlage wird nach der Erkennung eines Brandes von den Brandmeldern der Brandmeldeanlage die Löschanlage von der Zentrale, vorzugsweise einer Brandmelder- und/oder Löschsteuerzentrale, angesteuert und der erkannte Brand mittels der Löschanlage gelöscht.

Löschanlagen können beispielsweise zahlreiche Brandschutzkomponenten umfassen, ausgebildet als Löschanlagenkomponenten wie beispielsweise Sprinkler, Düsen, Ventile oder Ventilstationen, sonstige Armaturen sowie Rohrleitungen und Löschmittelbehälter.

Um die ständige Einsatzbereitschaft und Zuverlässigkeit der Brandschutzkomponenten einer Brandschutzanlage zu gewährleisten müssen nach nationalen Vorschriften und/oder nationalen oder internationalen Normen in regelmäßigen Zeitabständen eine Überprüfung der Brandschutzkomponenten durchgeführt werden.

Die Überprüfung wird in Rahmen der notwendigen Instandhaltung durchgeführt und kann beispielsweise Sichtkontrollen von Brandschutzkomponenten und/oder Testauslösungen von Brandschutzkomponenten, beispielsweise von Brandmeldern umfassen.

In Deutschland wird dies beispielsweise für Brandmelder durch die DIN 14665 (Ausgabe 2012) und die DIN-VDE 0833 Teil 1 (Ausgabe 2009) und Teil 2 (Ausgabe 2010) festgelegt.

Die DIN-VDE 0833 Teil 1 (2009) schreibt beispielsweise vor, dass eine Begehung der Gefahrenmeldeanlage, beispielsweise einer Brandmeldeanlage viermal jährlich erfolgen muss um die Brandmeldeanlage, insbesondere die Brandschutzkomponenten wie Brandmelder auf sichtbare Störungen zu überprüfen, beispielsweise auf äußere Beschädigung oder Verschmutzung oder auf Änderungen der Umgebungsbedingungen. Dies ist beispielsweise mit einer Überprüfung der Brandschutzkomponenten durch eine Sichtprüfung möglich und kann im Stand der Technik beispielsweise durch eine Sichtkontrolle bei einer Überprüfung durch das Service- oder das Instandhaltungspersonal realisiert werden.

So konkretisiert beispielsweise die DIN-VDE 0833 Teil 2, dass regelmäßig durch den Betreiber zu prüfen ist, ob der freie Raum um die Brandmelder eingehalten wird. Beispielsweise dürfen sich weder Einrichtungen noch Lagergut innerhalb eines Abstandes von weniger als 0,5 m vom Melder befinden. Solche Gegenstände in unmittelbarer Nähe eines Brandmelders können dazu führen, dass die Ausbreitung einer Brandkenngröße zum Brandmelder hin verhindert oder abgeschwächt wird, so dass der Brandmelder einen Brand nicht detektieren kann. Auch diese Überprüfung wird im Stand der Technik beispielsweise durch eine Sichtkontrolle bei einer Überprüfung durch das Service- oder Instandhaltungspersonal realisiert.

Weiterhin schreibt die DIN-VDE 0833 Teil 1 vor, das mindestens einmal jährlich Funktionsprüfungen an allen Brandmeldern durchgeführt werden, die sich zerstörungsfrei prüfen lassen. Dies sind beispielsweise Rauchmelder, Brandgasmelder, Flammenmelder, Rauchansaugsysteme, Multisensormelder.

Sichtkontrollen für Sprinkler sind beispielsweise in den Normen DIN EN 12845, CEA 4001, NFPA 25 und FM 2-81 vorgegeben.

So werden beispielsweise Rauchmelder mindestens einmal im Jahr durch das Servicepersonal bzw. Instandhaltungspersonal mit einem Testgerät, welches durch manuelle Betätigung ein Aerosol als Testkenngröße in die Messkammer des Rauchmelders abgibt, ausgelöst und die Ergebnisse dieser Testauslösung werden erfasst. Auch alle anderen Arten von Brandmeldern müssen manuell ausgelöst werden und je nach Typ des Brandmelders (z.B. Rauchmelder, Gasmelder, Flammenmelder) sind andere Testgeräte notwendig, welche eine dem Meldertyp adäquate Testkenngröße erzeugen können welche zur Testauslösung des Brandmelders führen kann.

Weiterhin umfasst eine Brandmeldeanlage in der Regel verschiedene Arten von Brandmeldern, die auf unterschiedlichen Messprinzipien mit unterschiedlichen Sensoren reagieren, so dass einen Vielzahl von Testgeräten mit verschiedenen Testkenngrößen vom Servicepersonal bzw. Instandhaltungspersonal vorgehalten und bei der Überprüfung mitgeführt werden müssen.

Brandmelder werden in gefährdeten Gebäuden und/oder Bereichen beispielsweise in einer Fabrikhalle installiert, überwiegend in einer Höhe in der das Servicepersonal bzw. Instandhaltungspersonal ohne Hilfsmittel wie Leitern oder Hebebühnen nicht gelangt.

Die US 2015/246727 A1 zeigt eine Vorrichtung zum Warten eines Detektors umfassend eine Flugvorrichtung, die von einem Nutzer mittels einer Steuervorrichtung ferngesteuert werden kann. Die Steuervorrichtung ist eingerichtet, die Flugvorrichtung zum Detektor zu navigieren, an dem sich zur Überprüfung des Detektors positioniert und eine Überprüfung des Detektors durchführt, indem sie einen Gaszufuhrtrichter über dem Detektor ausrichtet und Gas auf den Detektor auslässt.

Somit ergeben sich eine Reihe von Nachteilen für die aus dem Stand der Technik bekannten Überprüfungsverfahren für Brandschutzkomponenten:
- hoher Aufwand an Personal, Zeit und Kosten;
- zur Überprüfung ist die Vorhaltung und Mitnahme einer Vielzahl von Testgeräten zur Testauslösung von Brandmeldern notwendig;
- die Überprüfung ist fehlerträchtig bzw. besteht sogar die Möglichkeit zum Überprüfungsbetrug durch manuelle und fehlerhafte Aufzeichnung der Überprüfungsergebnisse bzw. durch Unterlassung der Überprüfung.

Der Erfindung lag vor diesem Hintergrund die Aufgabe zugrunde, ein Verfahren zur Überprüfung einer Brandschutzkomponente einer Brandschutzanlage sowie ein unbemanntes Fahrzeug zur Überprüfung einer Brandschutzkomponente einer Brandschutzanlage zu entwickeln, welche die genannten Nachteile aus dem Stand der Technik möglichst weitgehend überwindet. Insbesondere soll ein kostengünstiges, schnelles und/oder vielseitig einsetzbares Überprüfungsverfahren und ein universelles unbemanntes Fahrzeug hierfür bereitgestellt werden. Zudem lag der Erfindung die Aufgabe zugrunde, die Überprüfung an Brandschutzkomponenten, welche in großer Höhe montiert sind, effizient, zuverlässig und ohne Gefährdung des Service- oder Instandhaltungspersonals durchzuführen. Die Gefährdung entsteht durch das Arbeiten in großer Höhe auf Leitern oder Hebebühnen.

Die Erfindung ist im beigefügten Anspruchssatz beschrieben.

Gemäß einem ersten Aspekt der Erfindung wird die genannte Aufgabe gelöst durch ein Verfahren zur Überprüfung einer Brandschutzkomponente einer Brandschutzanlage mit den Merkmalen des Anspruchs 1. Vorteilhafte Ausgestaltungen und bevorzugte Ausführungsformen des Verfahren zur Überprüfung einer Brandschutzkomponente einer Brandschutzanlage sind in den zugehörigen Unteransprüchen 2 bis 6 und in der nachfolgenden Beschreibung wiedergegeben.

Die Lösung betrifft in einem ersten Aspekt der Erfindung ein Verfahren zur Überprüfung einer Brandschutzkomponente einer Brandschutzanlage, die mehrere Brandschutzkomponenten aufweist, für die jeweils eine Überprüfung vorgesehen ist. Das Verfahren umfasst folgende Schritte:
a) Bereitstellen eines unbemannten Fahrzeuges mit einer ersten Signalsende-und/oder Empfangseinheit, die zum Empfang eines Identifikationssignals ausgebildet ist, das Identifikationsdaten zur Charakterisierung und/oder Identifikation von jeder der mehreren Brandschutzkomponenten repräsentiert, wobei die Identifikationsdaten zumindest eine der jeweiligen Brandschutzkomponente der mehreren Brandschutzkomponenten zugeordnete Überprüfungsposition repräsentieren, die Identifikationsdaten einen Typ der jeweiligen Brandschutzkomponente der mehreren Brandschutzkomponenten repräsentieren; und wobei das unbemannte Fahrzeug mit einer Übermittlung der Identifikationsdaten relevante Informationen zur Auswahl erhält, welche Art der Überprüfung an der jeweiligen Brandschutzkomponente der mehreren Brandschutzkomponenten durchgeführt werden muss;
b) Navigieren des unbemannten Fahrzeuges mittels einer Navigationssteuereinheit des unbemannten Fahrzeuges, basierend auf den entsprechenden Identifikationsdaten durch Zuordnen einer entsprechenden Überprüfungsposition zu jeder der mehreren Brandschutzkomponenten basierend auf den Identifikationsdaten, zu einer Brandschutzkomponente der mehreren Brandschutzkomponenten, an welcher eine Überprüfung durchgeführt werden soll, wobei das unbemannte Fahrzeug derart zu der einen Brandschutzkomponente navigiert wird, so dass das unbemannte Fahrzeug in der der Brandschutzkomponente zugeordneten Überprüfungsposition angeordnet ist; und
c) Durchführung der Überprüfung an der Brandschutzkomponente mittels einer Überprüfungsvorrichtung des unbemannten Fahrzeuges entsprechend der zu durchführenden Art der Überprüfung an der jeweiligen Brandschutzkomponente.

Unter Überprüfung werden Instandhaltungsmaßnahmen, insbesondere die Analyse der äußeren Erscheinung von Brandschutzkomponenten und deren näherer Umgebung, insbesondere von Brandmeldern oder Löschanlagenkomponenten, beispielsweise von Sprinklern, mittels Erfassung von Bildern und/oder Bilddaten, analog zur Sichtkontrolle und/oder beispielsweise die Testauslösung von Brandschutzkomponenten, vorzugsweise von Brandmeldern, verstanden.

Das unbemannte Fahrzeug kann im Folgenden auch als Fahrzeug bezeichnet sein.

Das unbemannte Fahrzeug weist eine Navigationssteuereinheit auf, welche zum Navigieren des Fahrzeuges ausgebildet und/oder konfiguriert ist. Die Navigation des Fahrzeuges kann mittels der zugehörigen Navigationssteuereinheit also automatisiert erfolgen. So kann die Navigationssteuereinheit beispielsweise basierend auf einem vorgegebenen Ziel, wie beispielsweise der Position der Brandschutzkomponente in einem Schutzbereich, welcher von der Brandschutzanlage geschützt wird, zu diesem Ziel navigieren. Das Ziel kann mittels Zieldaten vorgegeben sein oder werden. Diese können von der Navigationssteuereinheit oder dem Fahrzeug gespeichert sein oder mittels eines Signals an die Navigationssteuereinheit übertragen werden. Die Navigationssteuereinheit oder das Fahrzeug kann dazu entsprechend ausgebildet sein. Das Fahrzeug kann einen Antrieb aufweisen, der direkt und/oder indirekt von der Navigationssteuereinheit steuerbar ist. Soll nun also eine Überprüfung der Brandschutzkomponente ausgeführt werden, kann das Fahrzeug mittels der Navigationssteuereinheit selbstständig und/oder automatisiert zu der Brandschutzkomponente navigieren. Dies bietet den Vorteil, dass das Fahrzeug auch zu der richtigen Brandschutzkomponente navigiert. Denn entsprechende Zieldaten können vorgegeben sein oder werden.

Für jede Brandschutzkomponente kann deshalb eine oder können vorzugsweise auch mehrere zugeordnete Überprüfungspositionen vorgesehen sein. Damit wird gewährleistet, dass für die verschiedenen Typen der Brandschutzkomponenten, beispielsweise für Brandmelder und für Löschanlagenkomponenten zugeordnete Überprüfungspositionen vorgegeben werden, die eine durchzuführende Überprüfung ermöglichen. Auch die verschiedenen Arten der Überprüfung, beispielsweise die Analyse der äußeren Erscheinung von Brandschutzkomponenten und deren näherer Umgebung, insbesondere von Brandmeldern oder Löschanlagenkomponenten, beispielsweise von Sprinklern, mittels Erfassung von Bildern und/oder Bilddaten mittels der Überprüfungsvorrichtung oder beispielsweise die Testauslösung von Brandschutzkomponenten, vorzugsweise von Brandmeldern, können unterschiedliche zugeordnete Überprüfungspositionen erfordern, welche das unbemannte Fahrzeug für die Durchführung der Überprüfung einnehmen muss.

Bei der zugeordneten Überprüfungsposition wird beispielsweise der ungehinderte Eintritt von erzeugten Testkenngrößen, insbesondere eine ausreichende Quantität der Testkenngröße, zur erfolgreichen Testauslösung von Brandmeldern, insbesondere verschiedener Typen von Brandmeldern, ermöglicht. Die zugeordnete Überprüfungsposition ermöglicht, dass die Testkenngröße vorzugsweise auf kürzestem Weg und in kürzester Zeit zum Sensor oder den Sensoren des Brandmelders gelangt, um eine Testauslösung des Brandmelders zu erreichen. Für eine erfolgreiche Testauslösung ist es erforderlich, dass eine ausreichende Quantität der Testkenngröße zum Sensor oder den Sensoren des Brandmelders gelangt.

Auch die Analyse der äußeren Erscheinung von Brandschutzkomponenten und/oder deren näherer Umgebung mittels Erfassung von Bildern und/oder Bilddaten wird vorzugsweise durch Vorgabe einer zugeordneten Überprüfungsposition effizient durchgeführt, da Hindernisse und Besonderheiten des Installationsortes der Brandschutzkomponente so berücksichtigt werden können.

In einer weiteren Ausführungsform werden die Verfahrensschritte b) und c) nacheinander,
für jede der Brandschutzkomponenten als die jeweilige Brandschutzkomponente, für die eine Überprüfung ausgeführt werden soll, ausgeführt.

Dies hat den Vorteil, dass mit dem unbemannten Fahrzeug die Überprüfung nacheinander für alle Brandschutzkomponenten einer Brandschutzanlage, für die eine Überprüfung ausgeführt werden soll, ohne Hilfsmittel wie Leitern oder Hebebühnen, kostenoptimiert und effizient durchgeführt werden kann, insbesondere unter Verwendung nur einer Überprüfungsvorrichtung.

In einer weiteren Ausführungsform des Verfahrens ist die oder jede Brandschutzkomponente als ein Brandmelder und/oder eine Löschanlagenkomponente ausgebildet. Vorzugsweise ist der Brandmelder oder sind die Brandmelder als vorzugsweise Rauchmelder, und/oder Wärmemelder, und/oder Flammenmelder, und/oder Funkenmelder, und/oder ein Rauchansaugsystem und/oder als Gasmelder ausgebildet.

Die Löschanlagenkomponente ist vorzugsweise als ein Sprinkler, eine Düse, ein Ventil, eine Ventilstation, eine sonstige Armatur, eine Rohrleitung oder ein Löschmittelbehälter ausgebildet. Diese Ausbildungen der Brandschutzkomponenten werden im Weiteren auch als Typ der Brandschutzkomponente bezeichnet, so ist beispielsweise ein Flammenmelder oder ein Rauchmelder oder ein Sprinkler oder ein Ventil ein Typ der Brandschutzkomponente. Die Brandmelder weisen vorzugsweise eine Brandkenngrößeneintrittsöffnung auf, über die Brandkenngrößen zum Sensor bzw. den Sensoren des Brandmelders gelangen können, damit dieser einen Brand detektieren kann. Brandkenngrößen sind beispielsweise Rauchaerosole, elektromagnetische Strahlung von Flammen oder Funken, Brandgase oder Wärmestrahlung vom Brandherd,

In einer weiteren Ausführungsform des Verfahrens ist das unbemannte Fahrzeug als ein Roboter, insbesondere ein Robot Crawler ausgebildet. Der Robot Crawler ist in der Lage, beispielsweise durch die Fortbewegung mit Hilfe mehrerer Gelenkarme, vorzugsweise mit mehrgliedrigen 6 bis 8 Gelenkarmen, die Überprüfungsvorrichtung über vertikale und horizontale Hindernisse hinweg, beispielsweise entlang von an der Decke montierten Rohrleitungen zu Brandschutzkomponenten, wie beispielsweise Sprinkler, Düsen oder Rohrverbindungselementen zu transportieren. Dies hat den Vorteil, dass die Überprüfung an für Service- oder Instandhaltungspersonal schwer zugänglichen bzw. gar nicht zugänglichen Brandschutzkomponenten schnell und kostengünstig durchgeführt werden kann.

In einer besonders bevorzugten Ausführungsform des Verfahrens ist das unbemannte Fahrzeug als ein unbemanntes Fluggerät, insbesondere als eine Drohne ausgebildet. Eine besonders vorteilhafte Ausgestaltung des unbemannten Fluggerätes oder der Drohne ist beispielsweise ein Multicopter, wie beispielsweise ein Quadrocopter oder ein Octocopter. Derartige Multicopter bieten den Vorteil, dass sie in einer beliebigen Position im Raum halten und/oder stehen können. Dies erlaubt eine besonders einfache Navigation zu der zu überprüfenden Brandschutzkomponente und insbesondere zur Einnahme der zugeordneten Überprüfungsposition für die Durchführung der Überprüfung der Brandschutzkomponente.

Vorzugsweise weist das unbemannte Fahrzeug eine Rechnereinheit, einen Speicher und/oder eine erste Signalsende- und/oder Empfangseinheit auf. Die Rechnereinheit dient vorzugsweise zur Steuerung des Antriebs des unbemannten Fahrzeuges. Weiterhin wird von dieser Rechnereinheit insbesondere die Durchführung der Überprüfung der Brandschutzkomponente gesteuert. Der Speicher umfasst vorzugsweise Positionskoordinaten der Brandschutzkomponenten, insbesondere die der zu überprüfenden Brandschutzkomponente zugeordnete Überprüfungsposition oder mehrerer zugeordnete Überprüfungspositionen, und/oder eine Liste mit den zu überprüfenden Brandschutzkomponenten. Besonders bevorzugt werden in diesem Speichern Daten abgelegt, welche die Durchführung der Überprüfung für jede zu wartende Brandschutzkomponente dokumentiert.

In einer weiteren Ausgestaltung des Verfahrens wird zwischen Schritt a) und Schritt b) der Verfahrensschritt a1) ausgeführt. In Schritt a1) erfolgt der Empfang eines Navigationssteuersignals, beispielsweise von einer Fernsteuerungsvorrichtung, mittels einer ersten Signalsende- und/oder Empfangseinheit des unbemannten Fahrzeuges. Das Navigieren des Fahrzeuges in Schritt b) erfolgt basierend auf diesem Navigationssteuersignal.

Die Fernsteuerungsvorrichtung kann beispielsweise als Smartphone, Tablet, PC oder Servicegerät ausgebildet sein. Die Fernsteuerungsvorrichtung weist vorzugsweise eine dritte Signalsende- und/oder Empfangseinheit auf, um mit der ersten Signalsende- und/oder Empfangseinheit des unbemannten Fahrzeuges Daten und/oder Signale auszutauschen, vorzugsweise Signale zum Navigieren und/oder Daten und/oder Signale zur Durchführung der ferngesteuerten Überprüfung der Brandschutzkomponenten.

Ein Vorteil der ferngesteuerten Instandhaltung mit dem unbemannten Fahrzeug, insbesondere mit einer Drohne ist, dass die Person, welche die Fernsteuerungsvorrichtung bedient, unmittelbar auf unvorhergesehene Umgebungsbedingungen im nahen Umfeld der Brandschutzkomponenten reagieren kann.

In einer alternativen Ausgestaltung des Verfahrens erfolgt das Navigieren in Schritt b) selbständig mittels der Navigationssteuereinheit. Dies hat den Vorteil, dass eine effiziente und automatisierte Überprüfung aller vorgesehenen Brandschutzkomponenten erfolgen kann. In einer weiteren alternativen Ausgestaltung des Verfahrens erfolgt das Navigieren in Schritt b) durch eine Kombination aus dem Navigieren des unbemannten Fahrzeuges basierend auf dem Navigationssteuersignal und dem selbständigen Navigieren mittels der Navigationssteuereinheit. Der Vorteil dieser Verfahrensvariante besteht in der Möglichkeit des Eingriffs des Service- oder Instandhaltungspersonals bei unvorhergesehenen Umgebungsbedingungen im nahen Umfeld einiger Brandschutzkomponenten, um mit der Fernsteuerung die Überprüfung an diesen Brandschutzkomponenten trotzdem erfolgreich auszuführen.

In einer weiteren Ausgestaltungsvariante des Verfahrens weist die Brandschutzkomponente eine zweite Signalsende- und/oder Empfangseinheit und einen Datenspeicher mit gespeicherten Identifikationsdaten auf. Diese Identifikationsdaten dienen der Charakterisierung und/oder der Identifikation der Brandschutzkomponente. Hierbei ist das Verfahren gekennzeichnet durch den Schritt a1):
drahtlose Übertragung der Identifikationsdaten an das unbemannte Fahrzeug mittels der zweiten Signalsende- und/oder Empfangseinheit. Dieser Verfahrensschritt a1) wird vor dem Schritt c) ausgeführt. Die Überprüfung in Schritt c)
wird hierbei basierend auf den Identifikationsdaten durchgeführt.

Die Identifikationsdaten repräsentieren gemäß der Erfindung einen Typ der Brandschutzkomponente, sowie optional eine Artikelnummer der Brandschutzkomponente, Fertigungsdaten der Brandschutzkomponente, ein Herstelldatum der Brandschutzkomponente, eine Seriennummer der Brandschutzkomponente, eine Softwareversion der Brandschutzkomponente, ein Datum der letzten Überprüfung der Brandschutzkomponente, Testkenngrößendaten der Brandschutzkomponente, Positionsdaten der der Brandschutzkomponente und gemäß der Erfindung eine der Brandschutzkomponente zugeordnete Überprüfungsposition, und/oder weisen diese auf.

Mit der Übermittlung der Identifikationsdaten an das unbemannte Fahrzeug erhält es die relevanten Informationen zur Auswahl welche Art der Überprüfung an der Brandschutzkomponente durchgeführt werden muss. Beispielsweise wird durch Übermittlung des Typs der Brandschutzkomponente festgelegt ob nur die Analyse der äußeren Erscheinung dieser Brandschutzkomponente und deren näherer Umgebung, mittels Erfassung von Bildern und/oder Bilddaten und/oder auch beispielsweise die Testauslösung von dieser Brandschutzkomponente im Verfahrensschritt d) erfolgen soll.

In einer weiteren Ausführungsform ist die zweiten Signalsende- und/oder Empfangseinheit als Funkidentifikationsmittel, beispielsweise als NFC- oder RFID-Tag ausgebildet und der Verfahrensschritt Schritt a1 ) wird durch ein Anregungssignal, welches bei Annäherung des unbemannten Fahrzeuges an die Brandschutzkomponente vom unbemannten Fahrzeug an die Brandschutzkomponente gesendet wird, gestartet.

Vorzugsweise schaltet das unbemannte Fahrzeug nach Erhalt der Identifikationsdaten in den Modus zum selbständigen Navigieren. Insbesondere navigiert das unbemannte Fahrzeug zur zugeordneten Überprüfungsposition.

Der Verfahrensschritt c) wird vorzugsweise durch ein Aktivierungssignal S_{A} ausgelöst, welches die Überprüfungsvorrichtung aktiviert und welches von der Fernsteuerungsvorrichtung und/oder der Rechnereinheit des Fahrzeuges nach Schritt b) erzeugt wird. Dies erfolgt nach Einnahme der zugeordneten Überprüfungsposition.

In einer bevorzugten Variante des Verfahrens weist die Überprüfungsvorrichtung eine Testvorrichtung zum Erzeugen einer Testkenngröße KT auf, wobei die Testvorrichtung einen Testkenngrößenaustritt für einen Austritt der Testkenngröße KT aufweist. Die Testvorrichtung erzeugt vorzugsweise in Schritt d) eine Testkenngröße KT, die durch den Testkenngrößenaustritt austritt. Die Testkenngröße KT erzeugt in der als Brandmelder ausgebildeten Brandschutzkomponente ein Brandmeldersignal S_{B} und/oder ein Lichtsignal einer optischen Anzeigevorrichtung am Brandmelder. Die optische Anzeigevorrichtung ist vorzugsweise als LED ausgebildet. Das Brandmeldersignal S_{B} wird vorzugsweise an das unbemannte Fahrzeug und/oder an eine Zentrale, vorzugsweise eine Brandmelder- und/oder Löschsteuerzentrale, und/oder an die Fernsteuerungsvorrichtung versendet. Dieses Brandmeldersignal S_{B} wird vorzugsweise als Testquittierungssignal S_{T} erfasst. Vorzugsweise wird als Testkenngröße KT von einem Aerosolerzeuger ein Aerosolstrom, und/oder von einem Gaserzeuger ein Testgas, und/oder von einer Strahlungsquelle eine elektromagnetische Strahlung, und/oder von einem Wärmeerzeuger Wärmestrahlung, und/oder von einem Schaltsignalerzeuger ein Schaltsignal erzeugt.

Vorzugsweise weist die Testvorrichtung als Schaltsignalerzeuger einen Permanentmagneten oder einen Elektromagneten auf, welcher bei Annäherung an die Brandschutzkomponente einen Reedschalter betätigt, welcher ein Schaltsignal erzeugt, und der sich an oder in der Brandschutzkomponente befindet und vorzugsweise einen Überprüfungsvorgang auslöst. Beispielsweise kann die Betätigung des Reedschalters in einem Brandmelder, der überprüft werden soll, einen Alarmwiderstand in den Alarmkreis der Brandmelderschaltung schalten und somit ein Testsignal erzeugen, welches vorzugsweise an einen Brandmelderzentrale gesendet wird.

Die Überprüfungsvorrichtung weist in einer weiteren Ausführungsvariante der Erfindung eine Bilderfassungsvorrichtung auf, die zur Erfassung eines Bildes und zur Erzeugung von Bilddaten, die das erfasste Bild repräsentieren, ausgebildet ist. Dies ist die Basis für folgende zusätzliche Ausführungsvariante des Verfahrens, in welcher Schritt d) die folgenden Teilschritte aufweist:
- Erfassen eines Bildes der Brandschutzkomponente;
- Erzeugung von Bilddaten, die das erfasste Bild repräsentieren; und
- Ermitteln einer Funktionsfähigkeit der Brandschutzkomponente.

Das Ermitteln der Funktionsfähigkeit der Brandschutzkomponente erfolgt vorzugsweise basierend auf den Bilddaten mittels der Überprüfungsvorrichtung. Hierzu erfolgt eine Bildauswertung bzw. ein Bildvergleich mit Hilfe von im Speicher des Fahrzeuges hinterlegten Vergleichsdaten.

In einer alternativen Ausgestaltung des Verfahrens weist die Überprüfungsvorrichtung ebenfalls eine Bilderfassungsvorrichtung auf, welche zur Erfassung eines Bildes und zur Erzeugung von Bilddaten, die das erfasste Bild repräsentieren, ausgebildet ist, wobei Schritt d) die folgenden Teilschritte aufweist:
- Erfassen eines Bildes der Brandschutzkomponenten;
- Erzeugung von Bilddaten, die das erfasste Bild repräsentieren; und
- Übertragen der Bilddaten an eine Zentrale und/oder die Fernsteuerungsvorrichtung
   und
- Ermitteln einer Funktionsfähigkeit der Brandschutzkomponente basierend auf den Bilddaten, vorzugsweise mittels der Zentrale und/oder der Fernsteuerungsvorrichtung.

Hierzu erfolgt eine Bildauswertung bzw. ein Bildvergleich mit Hilfe von in der Zentrale und/oder der Fernsteuerungsvorrichtung hinterlegten Vergleichsdaten. Alternativ erfolgt die Bildauswertung visuell durch das Service- oder Instandhaltungspersonal.

Die Bilderfassungsvorrichtung ist vorzugsweise ausgebildet und/oder konfiguriert, das Lichtsignal der optischen Anzeigevorrichtung des Brandmelders mit weiteren Bilddaten zu erfassen. Dies ist wesentlich zuverlässiger als die visuelle Kontrolle bei der visuellen Durchführung der Überprüfung durch Sichtkontrolle bei Begehungen, da die Brandmelder oft in großer Höhe angebracht sind, was ein Erkennen des Leuchtens einer LED bei einer Testauslösung erschwert. Weiterhin stellen die gespeicherten Bilddaten und die vorzugsweise ebenfalls gespeicherten weiteren Bilddaten eine sichere und nachvollziehbare Dokumentation der Überprüfung dar, was ein wesentlicher Vorteil im Vergleich zur visuellen Durchführung der Sichtkontrolle im Rahmen der Überprüfung bei einer Begehung ist.

In einer weiteren Ausgestaltung des Verfahrens weist die Testvorrichtung eine dreh-, schwenk- und/oder längenverstellbare Ausrichtungsvorrichtung auf, an der der Testkenngrößenaustritt angeordnet ist, und wobei das Verfahren weiter gekennzeichnet ist durch den Schritt b2): Ausrichten des Testkenngrößenaustritt in Richtung der Brandschutzkomponente mittels der Ausrichtungsvorrichtung. Der Verfahrensschritt b2) wird vorzugsweise vor dem Schritt c) ausgeführt.

In einer weiteren bevorzugten Ausgestaltung des Verfahrens erzeugt die Testvorrichtung, vorzugsweise nach Erhalt des Aktivierungssignals S_{A}, eine Testkenngröße KT. Als Testkenngröße KT wird hierbei vorzugsweise vom Aerosolerzeuger ein Aerosolstrom KT₁, und/oder vom Gaserzeuger ein Testgas KT₂, und/oder von der Strahlungsquelle eine elektromagnetische Strahlung KT₃, und/oder von dem Wärmeerzeuger eine Wärmestrahlung KT₄, und/oder vom Schaltsignalerzeuger ein Schaltsignal erzeugt, wobei ferner vorzugsweise zwei, drei oder vier verschiedene Testkenngrößen KT, insbesondere synchron oder nacheinander, von der Testvorrichtung erzeugt werden. Die Auswahl der Testkenngröße erfolgt vorzugsweise durch die übermittelten Identifikationsdaten, insbesondere den Typ der Brandschutzkomponente und/oder den Testkenngrößendaten.

Dies hat den großen Vorteil, dass abhängig vom Typ der Brandschutzkomponente, insbesondere vom Typ des Brandmelders, schnell und zuverlässig die richtige Testkenngröße ausgewählt wird, welche zur Testauslösung des Brandmelders führt.

Gemäß einem zweiten Aspekt der Erfindung wird die eingangs genannte Aufgabe durch ein unbemanntes Fahrzeug mit den Merkmalen nach Anspruch 7 gelöst. Vorteilhafte Ausgestaltungen und Weiterbildungen finden sich in den Unteransprüchen 8 bis 14, sowie den nachfolgenden Ausführungen der Beschreibung und der Figurenbeschreibung. Bezüglich des unbemannten Fahrzeuges gemäß dem zweiten Aspekt der Erfindung wird auf die vorangegangen Erläuterungen, bevorzugten Ausgestaltungen, bevorzugten Merkmale, Vorteile und/oder Effekte in analoger Weise Bezug genommen, wie sie in entsprechender Weise für das Verfahren gemäß dem ersten Aspekt der Erfindung erörtert worden sind.

Das unbemannte Fahrzeug zur Überprüfung einer Brandschutzkomponente einer Brandschutzanlage, die mehrere Brandschutzkomponenten aufweist, für die jeweils eine Überprüfung vorgesehen ist, wobei jeder der mehreren Brandschutzkomponenten jeweils eine entsprechende Überprüfungsposition zugeordnet ist, umfasst eine Überprüfungsvorrichtung zur Durchführung der Überprüfung der Brandschutzkomponente und einer Navigationssteuereinheit, die zum Navigieren des unbemannten Fahrzeuges zu der entsprechenden Brandschutzkomponente ausgebildet und/oder konfiguriert ist, an welcher eine Überprüfung durchgeführt werden soll. Das Fahrzeug ist dazu ausgebildet und/oder konfiguriert, die Überprüfung der Brandschutzkomponente nach Erreichen der Brandschutzkomponente mittels der Überprüfungsvorrichtung auszuführen.

Hierbei ist die Navigationssteuereinheit ausgebildet und/oder konfiguriert, das unbemannte Fahrzeug derart zu der Brandschutzkomponente zu navigieren, so dass das unbemannte Fahrzeug in einer der Brandschutzkomponente zugeordneten Überprüfungsposition angeordnet ist.

Eine weitere vorteilhafte Ausgestaltung des Fahrzeuges zeichnet sich dadurch aus, dass die Brandschutzanlage mehrere Brandschutzkomponenten aufweist, für die jeweils eine Überprüfung vorgesehen ist und die Navigationssteuereinheit dazu ausgebildet und/oder konfiguriert ist, das unbemannte Fahrzeug nacheinander zu jeder der Brandschutzkomponenten zu navigieren. Das Fahrzeug ist hierbei dazu ausgebildet und/oder konfiguriert, die Überprüfung der Brandschutzkomponenten nacheinander mittels der Überprüfungsvorrichtung auszuführen.

Vorzugsweise ist die oder jede Brandschutzkomponente als ein Brandmelder und/oder eine Löschanlagenkomponente ausgebildet.

Eine weitere vorteilhafte Ausgestaltung des Fahrzeugs zeichnet sich dadurch aus, dass das unbemannte Fahrzeug als ein unbemanntes Fluggerät, eine Drohne oder ein Roboter, insbesondere ein Robot Crawler, ausgebildet ist. Vorzugsweise weist das unbemannte Fahrzeug eine Rechnereinheit, einen Speicher und/oder eine erste Signalsende- und/oder Empfangseinheit auf.

Eine weitere vorteilhafte Ausgestaltung des Fahrzeuges zeichnet sich dadurch aus, dass die erste Signalsende- und/oder Empfangseinheit zum Empfang eines Navigationssteuersignals, insbesondere von einer Fernsteuerungsvorrichtung, ausgebildet ist, und die Navigationssteuereinheit dazu ausgebildet und/oder konfiguriert ist, das unbemannte Fahrzeug zu der Brandschutzkomponente oder einer der Brandschutzkomponenten, insbesondere zu der jeweiligen Überprüfungsposition, insbesondere zur zugeordneten Überprüfungsposition basierend auf dem Navigationssteuersignal zu navigieren.

Vorzugseise ist die Navigationssteuereinheit dazu ausgebildet und konfiguriert, das unbemannte Fahrzeug selbständig zu navigieren oder alternativ zum selbstständigen Navigieren des unbemannten Fahrzeuges und zum Navigieren des Fahrzeuges basierend auf dem Navigationssteuersignal.

Eine besonders bevorzugte Ausgestaltung des Fahrzeuges zeichnet sich dadurch aus, dass die erste Signalsende- und/oder Empfangseinheit oder eine weitere Signalsende- und/oder Empfangseinheit des unbemannten Fahrzeuges zum, insbesondere drahtlosen, Empfang eines Identifikationssignals ausgebildet ist, das Identifikationsdaten zur Charakterisierung und/oder Identifikation der oder der mindestens einen Brandschutzkomponente repräsentiert, und das unbemannte Fahrzeug zum Ausführen der Überprüfung der jeweiligen Brandschutzkomponente basierend auf den entsprechenden Identifikationsdaten ausgebildet und/oder konfiguriert ist. Erfindungsgemäß repräsentieren die Identifikationsdaten einen Typ der Brandschutzkomponente, sowie optional eine Artikelnummer der Brandschutzkomponente, Fertigungsdaten der Brandschutzkomponente, ein Herstelldatum der Brandschutzkomponente, eine Seriennummer der Brandschutzkomponente, eine Softwareversion der Brandschutzkomponente, ein Datum der letzten Überprüfung der Brandschutzkomponente, Testkenngrößendaten der Brandschutzkomponente, Positionsdaten der der Brandschutzkomponente, und erfindungsgemäß eine zugeordnete Überprüfungsposition der Brandschutzkomponente, und/oder die Identifikationsdaten weisen diese auf.

Die erste Signalsende- und/oder Empfangseinheit oder die weitere Signalsende- und/oder Empfangseinheit sind in einer weiteren Ausgestaltung des Fahrzeuges ausgebildet und/oder konfiguriert, das Identifikationssignal von einem Funkidentifikationsmittel, insbesondere einem NFC-Tag oder eine RFID-Tag, der Brandschutzkomponente zu empfangen. Das Fahrzeug ist vorzugsweise ferner ausgebildet und/oder konfiguriert die Ergebnisse der Überprüfung, vorzugsweise Daten der Überprüfungsergebnisse, und/oder das Datum der Überprüfung an das Funkidentifikationsmittel zu übertragen. Dies bietet den Vorteil, dass diese Daten dann dort gespeichert werden können und bei einer nachfolgenden Überprüfung zur Verfügung stehen.

Eine weitere vorteilhafte Ausgestaltung des Fahrzeuges zeichnet sich dadurch aus, dass das unbemannte Fahrzeug dazu ausgebildet und/oder konfiguriert ist, ein Aktivierungssignal S_{A} zu generieren, insbesondere wenn das unbemannte Fahrzeug die jeweilige Brandschutzkomponente und/oder die zugehörige Überprüfungsposition erreicht, und das unbemannte Fahrzeug dazu ausgebildet und/oder konfiguriert ist, die Überprüfung der jeweiligen Brandschutzkomponente zu aktivieren, wenn und/oder sobald das Aktivierungssignal S_{A} generiert ist.

Eine weitere bevorzugte Ausgestaltung des Fahrzeuges zeichnet sich dadurch aus, dass die Überprüfungsvorrichtung eine Bilderfassungsvorrichtung aufweist, die zur Erfassung eines Bildes und zur Erzeugung korrespondierender Bilddaten einer zuvor erreichten Brandschutzkomponente ausgebildet und/oder konfiguriert ist, und vorzugsweise die Überprüfungsvorrichtung zur Ermittlung einer Funktionsfähigkeit der Brandschutzkomponente basierend auf den Bilddaten ausgebildet und/oder konfiguriert ist. Die Bilddaten werden vorzugsweise in der Überprüfungsvorrichtung oder im Fahrzeug gespeichert. Zur Ermittlung der Funktionsfähigkeit der Brandschutzkomponente erfolgt eine Bildauswertung bzw. Bildvergleich mit Hilfe von im Speicher des Fahrzeuges hinterlegten Vergleichsdaten. Mittels Erfassung von Bildern und/oder Bilddaten erfolgt die Analyse der äußeren Erscheinung von Brandschutzkomponenten und deren näherer Umgebung, insbesondere von Brandmeldern oder Löschanlagenkomponenten wie Sprinkler. Die Funktionsfähigkeit wird aus den Bilddaten direkt oder indirekt abgeleitet. So ist das Bild einer defekten Glasampulle eines Sprinklers ein direktes Merkmal für ein Fehlen der Funktionsfähigkeit. Ein Gegenstand in Nähe, z.B. näher als 0,5 m zu einem Brandmelder ist ein indirekter Hinweis zur fehlenden Funktionsfähigkeit.

Eine alternative Ausgestaltung des Fahrzeuges zeichnet sich dadurch aus, dass die Überprüfungsvorrichtung eine Bilderfassungsvorrichtung aufweist, die zur Erfassung eines Bildes und zur Erzeugung korrespondierender Bilddaten der zuvor erreichten Brandschutzkomponente ausgebildet und/oder konfiguriert ist. Das Fahrzeug ist zur Übertragung der Bilddaten, insbesondere mittels der ersten Signalsende- und/oder Empfangseinheit, an eine Zentrale und/oder die Fernsteuerungsvorrichtung ausgebildet und/oder konfiguriert. Die Bilddaten werden dort vorzugsweise gespeichert. Dies bietet die Möglichkeit eine Bildauswertung bzw. Bildvergleich mit Hilfe von in der Zentrale und/oder der Fernsteuerungsvorrichtung hinterlegten Vergleichsdaten durchzuführen. Alternativ erfolgt die Bildauswertung visuell durch das Service- oder Instandhaltungspersonal.

Eine weitere bevorzugte Ausgestaltung des unbemannten Fahrzeuges zeichnet sich dadurch aus, dass die Überprüfungsvorrichtung eine Testvorrichtung zum Erzeugen einer Testkenngröße aufweist. Die Testvorrichtung weist einen Testkenngrößenaustritt für einen Austritt der Testkenngröße auf. Die Testvorrichtung umfasst beispielsweise einen Aerosolerzeuger, einen Gaserzeuger, eine Strahlungsquelle, einen Wärmeerzeuger und/oder einen Schaltsignalerzeuger. Die Testvorrichtung ist zum Durchführen der Überprüfung dazu konfiguriert und/oder ausgebildet, die Testkenngröße zu erzeugen, die vorzugsweise durch den Testkenngrößenaustritt ausbringbar ist.

Die Vorrichtungen zur Erzeugung von Testkenngrößen werden im Weiteren als Testkenngrößenerzeuger bezeichnet. Somit weist die Testvorrichtung vorzugsweise Testkenngrößenerzeuger auf. Die Testkenngrößenerzeuger sind vorzugsweise austauschbar. Dies hat den Vorteil, dass nach vollständigem Verbrauch oder Ausfall der testkenngrößenerzeugenden Mittel, wie beispielsweise des Testgases oder der Prüfaerosole, der Testkenngrößenerzeuger getauscht werden kann und die Testvorrichtung schnell wieder für Überprüfungen zur Verfügung steht.

Vorzugsweise ist die Testvorrichtung zum Erzeugen der Testkenngröße, beispielsweise nach Erhalt des Aktivierungssignals S_{A}, ausgebildet und/oder konfiguriert. Als Testkenngröße ist beispielsweise vom Aerosolerzeuger ein Aerosolstrom, und/oder vom Gaserzeuger ein Testgas, und/oder von der Strahlungsquelle eine elektromagnetische Strahlung und/oder von dem Wärmeerzeuger eine Wärmestrahlung, und/oder vom Schaltsignalerzeuger ein Schaltsignal erzeugbar. Die Testkenngröße wird erzeugt und genutzt um eine Testauslösung des zu überprüfenden Brandmelders durchzuführen. Die Testkenngröße bildet vorzugsweise die entsprechende Brandkenngröße nach, welche dem jeweiligen Messprinzip des zu überprüfenden Melders zu Grunde liegt und welche den Brandmelder auslösen kann.

In einer vorzugsweisen Ausgestaltung des unbemannten Fahrzeuges mit mehreren Testkenngrößenerzeugern, ist die Testvorrichtung zum, insbesondere synchronen oder sequentiellen, Erzeugen von zwei, drei oder vier verschiedenen Testkenngrößen KT ausgebildet und/oder konfiguriert. Dies hat den Vorteil, dass mit nur einem unbemannten Fahrzeug Multisensormelder und/oder verschiedenen Typen von Brandmelder, wie Rauchmelder, Gasmelder, Wärmemelder oder Flammenmelder, überprüft werden können.

In einer weiteren vorzugsweisen Ausgestaltung des unbemannten Fahrzeuges ist die Testvorrichtung dazu ausgebildet und/oder konfiguriert, die Erzeugung der mindestens einen Testkenngröße basierend auf dem Identifikationssignal, insbesondere auf den Testkenngrößendaten der jeweiligen Brandschutzkomponente zu kontrollieren, insbesondere eine zeitliche Abfolge der Erzeugung und/oder Ausbringung der Testkenngrößen, sofern mehrere Testkenngrößen KT vorgesehen sind. Dies ist insbesondere für Multisensormelder von Vorteil, beispielsweise für einen kombinierten Rauch-, Wärme- und Kohlenmonoxid-Melder. Hier können dann in einer vorgegebenen zeitlichen Abfolge die für die jeweiligen Sensoren zur Testauslösung notwendigen Testkenngrößen erzeugt werden. Um jeden Sensor eines solchen Multisensormelders zu testen, sind so auch drei Testauslösungen am Melder realisierbar.

In einer weiteren bevorzugten Ausgestaltung des unbemannten Fahrzeuges, weist die Testvorrichtung eine dreh-, schwenk- und/oder längenverstellbare Ausrichtungsvorrichtung auf, an der der Testkenngrößenaustritt angeordnet ist. Das unbemannte Fahrzeug, insbesondere die Testvorrichtung, ist zur Steuerung der Ausrichtungsvorrichtung ausgebildet und/oder konfiguriert, um den Testkenngrößenaustritt, insbesondere zu oder relativ zu der jeweiligen Brandschutzkomponente, auszurichten. Hierbei ist vorzugsweise der Testkenngrößenaustritt an einem von dem Fahrzeug abgewandten Endabschnitt der Ausrichtungsvorrichtung angeordnet.

Dies hat den Vorteil, dass beispielsweise in der Ausgestaltung des unbemannten Fahrzeuges als Drohne, die Luftbewegung und Turbulenzen, welche durch die Drehflügel verursacht werden, die Ausbreitung der Testkenngröße weniger behindert.

Die Ausrichtung des Testkenngrößenaustritts mittels der Ausrichtungsvorrichtung ist hilfreich um zu erreichen, dass die Testkenngröße nach dem Austritt aus dem Testkenngrößenaustritt, vorzugsweise auf kürzestem Weg und in kürzester Zeit, in die Brandkenngrößeneintrittsöffnung des Brandmelders gelangt, um eine Testauslösung des Brandmelders zu erreichen. Für eine erfolgreiche Testauslösung ist es erforderlich das eine ausreichende Quantität der Testkenngröße durch die Brandkenngrößeneintrittsöffnung zum Sensor oder den Sensoren des Brandmelders gelangt. Das Luftvolumen zwischen dem Testkenngrößenaustritt und der Brandkenngrößeneintrittsöffnung, in dem sich die Testkenngröße ausbreiten kann, stellt das Testkenngrößenausbreitungsvolumen dar. Je kleiner dieses Testkenngrößenausbreitungsvolumen ist, desto größer ist die Wahrscheinlichkeit, dass eine ausreichende Quantität der Testkenngröße durch die Brandkenngrößeneintrittsöffnung zum Sensor oder den Sensoren des Brandmelders gelangt und eine Testauslösung zur Überprüfung des Brandmelders erfolgt. So würde sich beispielsweise ein Aerosolstrom, der vorzugsweise durch Abgabe eines unter Druck stehenden Prüfgases mit Prüfaerosolen entsteht, bei einem unbegrenzten Testkenngrößenausbreitungsvolumen sich unter Umständen in der Umgebung des Brandmelders so verteilen, dass keine ausreichende Quantität der Testkenngröße durch die Brandkenngrößeneintrittsöffnung zum Sensor oder den Sensoren des Brandmelders gelangt, um eine Testauslösung zu erzeugen. Um dies zu verhindern ist beispielsweise die Erzeugung und/oder Verwendung eines definierten Testkenngrößenausbreitungsvolumens vorteilhaft.

Dies wird in einer weiteren vorteilhaften Ausgestaltung des unbemannten Fahrzeuges umgesetzt. Das unbemannte Fahrzeug weist hierbei eine Abschirmungsvorrichtung auf. Die Abschirmungsvorrichtung ist vorzugsweise dazu ausgebildet, um die Brandschutzkomponente herum ein definiertes Testkenngrößenausbreitungsvolumen auszubilden. Das definierte Testkenngrößenausbreitungsvolumen bildet vorzugsweise ein nahezu gegenüber der Umgebungsluft der Brandschutzkomponente abgeschlossenes Ausbreitungsvolumen für die Testkenngröße. Somit breitet sich die Testkenngröße nahezu nur oder ausschließlich im gebildeten definierten Testkenngrößenausbreitungsvolumen aus.

Die Abschirmungsvorrichtung umschließt vorzugsweise den Testkenngrößenaustritt der Testvorrichtung und eine Brandkenngrößeneintrittsöffnung eines Brandmelders und ist ausgebildet, ein definiertes Testkenngrößenausbreitungsvolumen zu erzeugen. Vorzugsweise kanalisiert die Abschirmungsvorrichtung die Testkenngröße KT, insbesondere den Aerosolstrom KT_{1;} insbesondere Prüfaerosol und/oder das Testgas KT₂, vom Testkenngrößenaustritt zu der Brandkenngrößeneintrittsöffnung.

Als eine beispielhafte Ausführung der Abschirmungsvorrichtung wird eine Kappe oder ein Trichteraufsatz vorgeschlagen, welche entweder komplett über den Brandmelder, an die Decke gedrückt wird, an der der Brandmelder befestigt ist oder am Brandmeldergehäuse derart angesetzt wird, dass mindestens eine Brandkenngrößeneintrittsöffnung umschlossen wird.

Vorzugsweise ist die Abschirmungsvorrichtung aus einem elastischen Material oder hat einen Dichtrand, beispielsweise aus Silikon, so dass beim Andrücken der Abschirmungsvorrichtung an die Decke, die Testkenngröße sich nahezu nur, oder vollständig, im gebildeten definierten Testkenngrößenausbreitungsvolumen ausbreiten kann.

In einer Ausbildung des unbemannten Fahrzeuges als Drohne mit einem oder mehreren Drehflügeln, weist die Abschirmungsvorrichtung eine Projektionsfläche senkrecht zu den Drehachsen der Drehflügel auf. Diese Projektionsfläche überlappt, betrachtet in Richtung der Drehachsen der Drehflügel, die von den Drehflügeln überstrichene Fläche zumindest teilweise. Diese Abschirmungsvorrichtung ist vorzugsweise ausgebildet, die oder den Drehflügel der Drohne gegen Luftströmungen mit einer Richtung entgegengesetzt zu einer nahezu senkrechten Flugrichtung abzuschirmen. Dies verhindert bzw. verringert beispielsweise eine Sogwirkung bei Annäherung der Drohne an eine Decke im Schutzbereich, insbesondere bei Annäherung an eine Brandschutzkomponente, die an der Decke montiert ist. Hierfür ist in einer besonders bevorzugten Ausführung der Abschirmungsvorrichtung diese als Trichteraufsatz ausgebildet, welcher vorzugsweise oberhalb der Drehebenen der Drehflügel angeordnet ist. Der sich in senkrechter Flugrichtung größer werdende Durchmesser der Trichterwandung führt dazu, dass der Trichteraufsatz, insbesondere die Formgebung der Außenwandung, die Luftströmung besonders effektiv ableitet, um die Sogwirkung zu verringern oder zu verhindern.

In einer weiteren vorzugsweisen Ausgestaltung des unbemannten Fahrzeuges weist die Abschirmungsvorrichtung ein erstes Abschirmelement und ein zweites Abschirmelement auf. Das erste Abschirmelement ist dazu ausgebildet, das definierte Testkenngrößenausbreitungsvolumen auszubilden. Das zweite Abschirmelement weist die Projektionsfläche senkrecht zu den Drehachsen der Drehflügel auf, welche, betrachtet in Richtung der Drehachsen der Drehflügel, die von den Drehflügeln überstrichene Fläche zumindest teilweise überlappt. Das erste Abschirmelement ist vorzugsweise als die beschriebene Kappe ausgebildet und das zweite Abschirmelement beispielsweise als Scheibe, welche vorzugsweise oberhalb der Drehebenen der Drehflügel angeordnet ist.

In einer weiteren bevorzugten Ausgestaltung des unbemannten Fahrzeuges ist die Testvorrichtung oder das unbemannte Fahrzeug zur Steuerung der Ausrichtungsvorrichtung derart ausgebildet und/oder konfiguriert ist, um die Abschirmungsvorrichtung so am Brandmelder oder an einer Decke, an der der Brandmelder montiert sein kann, zu positionieren, dass das definierte Testkenngrößenausbreitungsvolumen ausbildbar ist, wobei der Brandmelder hierbei von der Abschirmvorrichtung vollständig oder teilweise umfasst wird, vorzugsweise derart, dass mindesten eine oder alle Brandkenngrößeneintrittsöffnungen innerhalb des definierten Testkenngrößenausbreitungsvolumens liegt oder liegen.

Die Abschirmvorrichtung weist eine Wandung mit einer Innen- und Außenwandung auf, wobei die Innenwandung eine Öffnung umfasst. Die Abschirmvorrichtung weist vorzugsweise eine zylindrische Kappenform, eine Form als Hohlkugelsegment oder die Form als Kegelstupf auf und damit eine Öffnung vorzugsweise in Form eines Kreises. Diese Öffnung wird vor Ausbringung der Testkenngröße über den Brandmelder gestülpt.

In einer weiteren bevorzugten Ausgestaltung des unbemannten Fahrzeuges, ist dieses ausgebildet und/oder konfiguriert, Daten der Überprüfungsergebnisse zu speichern, insbesondere im Speicher des Fahrzeuges. Die Daten der Überprüfungsergebnisse umfassen vorzugsweise Bilddaten der überprüften Brandschutzkomponenten und/oder Daten, welche die erfolgreiche Testauslösung der Brandschutzkomponenten, ausgebildet als Brandmelder, repräsentieren, sowie vorzugsweise das Datum der Durchführung der Überprüfung. Diese Daten umfassen ferner vorzugsweise Identifikationsdaten der überprüften Brandschutzkomponenten.

Zum Auslesen der Überprüfungsergebnisse, insbesondere nach Beendigung der Überprüfung aller hierfür ausgewählten oder vorgegebenen Brandschutzkomponenten der Brandschutzanlage, weist das unbemannte Fahrzeug vorzugsweise eine Schnittstelle auf. Über diese Schnittstelle können drahtgebunden oder drahtlos die Daten der Überprüfungsergebnisse in eine Wartungsdatenbank überspielt werden. Die Wartungsdatenbank ist vorzugsweise in der Zentrale, auf einem Servicegerät, einem PC, einem Tablet, einem Notebook oder einem anderen Gerät gespeichert.

Das unbemannte Fahrzeug gemäß dem zweiten Aspekt der Erfindung und allen beschriebenen Ausgestaltungen ist vorzugsweise ausgebildet und/oder konfiguriert, ein Verfahren zur Überprüfung der mindestens einen Brandschutzkomponente der Brandschutzanlage nach einem der Ansprüche 1 bis 6 durchzuführen.

Gemäß einem dritten Aspekt der Erfindung wird die eingangs genannte Aufgabe durch ein Brandschutzsystem gelöst. Bezüglich der Komponenten bzw. Vorrichtungen des Brandschutzsystems gemäß dem dritten Aspekt der Erfindung wird auf die vorangegangenen Erläuterungen, bevorzugten Ausgestaltungen, bevorzugten Merkmale, Vorteile und/oder Effekte in analoger Weise Bezug genommen, wie sie in entsprechender Weise für das Verfahren gemäß dem ersten Aspekt der Erfindung und/oder für das unbemannte Fahrzeug gemäß dem zweiten Aspekt der Erfindung erörtert worden sind.

Das erfindungsgemäße Brandschutzsystem umfasst eine Brandschutzanlage mit mehreren Brandschutzkomponenten, ein unbemanntes Fahrzeug entsprechend dem zweiten Aspekt der Erfindung, nach einem der Ansprüche 7 bis 14, und eine weitere Vorrichtung, insbesondere eine Zentrale, beispielsweise eine Brandmelder- und/oder Löschsteuerzentrale, und/oder eine Fernsteuerungsvorrichtung. Das unbemannte Fahrzeug ist ausgebildet und/oder konfiguriert ein Verfahren zur Überprüfung der mindestens einen Brandschutzkomponente der Brandschutzanlage entsprechend dem ersten Aspekt der Erfindung, nach einem der Ansprüche 1 bis 6 durchzuführen.

Eine bevorzugte Ausgestaltung des Brandschutzsystems zeichnet sich dadurch aus, dass die Brandschutzkomponente als Brandmelder ausgebildet ist und dass das unbemannte Fahrzeug eine Überprüfungsvorrichtung mit einer Testvorrichtung aufweist, wobei die Testvorrichtung zum Erzeugen einer Testkenngröße KT ausgebildet und/oder konfiguriert ist, wobei ferner der Brandmelder ausgebildet und/oder konfiguriert ist, nach einer Detektion der Testkenngröße KT, ein Brandmeldersignal S_{B} und/oder ein Lichtsignal einer optischen Anzeigevorrichtung des Brandmelders zu erzeugen, wobei vorzugsweise das Brandmeldersignal S_{B} an die Zentrale, vorzugsweise an eine Brandmelder- und/oder Löschsteuerzentrale gesendet wird.

Vorzugsweise ist die Zentrale ausgebildet und/oder konfiguriert dieses Brandmeldersignal S_{B} als Testquittierungssignal S_{T} zu erfassen. Ferner ist die Zentrale vorzugsweise ausgebildet und/oder konfiguriert, vor Überprüfung der mindestens einen Brandschutzkomponente in einen Testmodus versetzt zu werden. Vorzugsweise erfasst die Bilderfassungsvorrichtung das Lichtsignal der optischen Anzeigevorrichtung am Brandmelder. Dies wird als erfolgreiche Durchführung der Überprüfung, insbesondere der Testauslösung im unbemannten Fahrzeug abgespeichert. Abgespeicherte Bilder des Lichtsignals werden als Daten verstanden, welche die erfolgreiche Testauslösung der Brandschutzkomponente, ausgebildet als Brandmelder, repräsentieren.

Der Testmodus der Zentrale ist dafür vorgesehen, dass die Zentrale nach Empfang eines Brandmeldersignals S_{B}, als Reaktion darauf kein Feueralarmsignal an die Feuerwehr oder eine andere Stelle weiterleitet, sondern dies als Testauslösung erfasst.

In einer bevorzugten Ausgestaltung des unbemannten Fahrzeuges und des Brandschutzsystems, ist das Fahrzeug ausgebildet und/oder konfiguriert, die Zentrale, insbesondere die Brandmelder- und/oder Löschsteuerzentrale, in den Testmodus zu versetzen. Hierzu ist das Fahrzeug vorzugsweise ausgebildet und/oder konfiguriert ein Testmodussignal, beispielsweise mittels der ersten Signalsende- und/oder Empfangseinheit, an die Zentrale, insbesondere die Brandmelder- und/oder Löschsteuerzentrale, zu senden, welche vorzugsweise dieses Testmodussignal mittels einer Zentralen-Sende- und/oder -Empfangsvorrichtung empfängt.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Fig. 1: zeigt das unbemannte Fahrzeug und das Brandschutzsystem in einer schematischen Darstellung.
- Fig. 2a: zeigt das unbemannte Fahrzeug in einer Ausbildung als Drohne in einer schematischen Darstellung.
- Fig. 2b: zeigt das unbemannte Fahrzeug in einer Ausbildung als Roboter in einer schematischen Darstellung.
- Fig. 2c: zeigt das unbemannte Fahrzeug in einer Ausbildung als Robot Crawler in einer schematischen Darstellung.
- Fig. 3a: zeigt eine Ausgestaltung des unbemannten Fahrzeuges in einer zugeordneten Überprüfungsposition in einer schematischen Darstellung.
- Fig. 3b: zeigt eine weitere Ausgestaltung des unbemannten Fahrzeuges in einer zugeordneten Überprüfungsposition in einer schematischen Darstellung.
- Fig. 4: zeigt eine Ausgestaltung der Testvorrichtung mit Ausrichtungsvorrichtung in einer schematischen Darstellung.
- Fig. 5: zeigt eine Ausgestaltung des unbemannten Fahrzeuges als Roboter in einer schematischen Darstellung.
- Fig. 6: zeigt eine Ausgestaltung des Fahrzeuges als Robot Crawler beim Navigieren zu einer Löschanlagenkomponente in einer schematischen Darstellung.
- Fig. 7: zeigt eine Ausgestaltung der Testvorrichtung des unbemannten Fahrzeuges in einer schematischen Darstellung.
- Fig. 8a: zeigt einen Ablaufplan von Verfahrensschritten einer bevorzugten Ausgestaltung des Verfahrens in einer schematischen Darstellung.
- Fig. 8b: zeigt einen Ablaufplan von Verfahrensschritten einer weiteren Ausgestaltung des Verfahrens in einer schematischen Darstellung.
- Fig. 8c: zeigt einen Ablaufplan von Verfahrensschritten einer dritten Ausgestaltung des Verfahrens in einer schematischen Darstellung.
- Fig. 9: zeigt in einer schematischen Darstellung eine Ausgestaltung des unbemannten Fahrzeuges als Drohne, als Quadrocopter, mit einer Abschirmungsvorrichtung.
- Fig. 10: zeigt in einer schematischen Darstellung die Draufsicht auf die Ausführung nach Fig. 9.
- Fig. 11: zeigt in einer schematischen Darstellung eine Ausgestaltung des unbemannten Fahrzeuges als Drohne mit einer Abschirmungsvorrichtung, welche zwei Abschirmelemente aufweist.

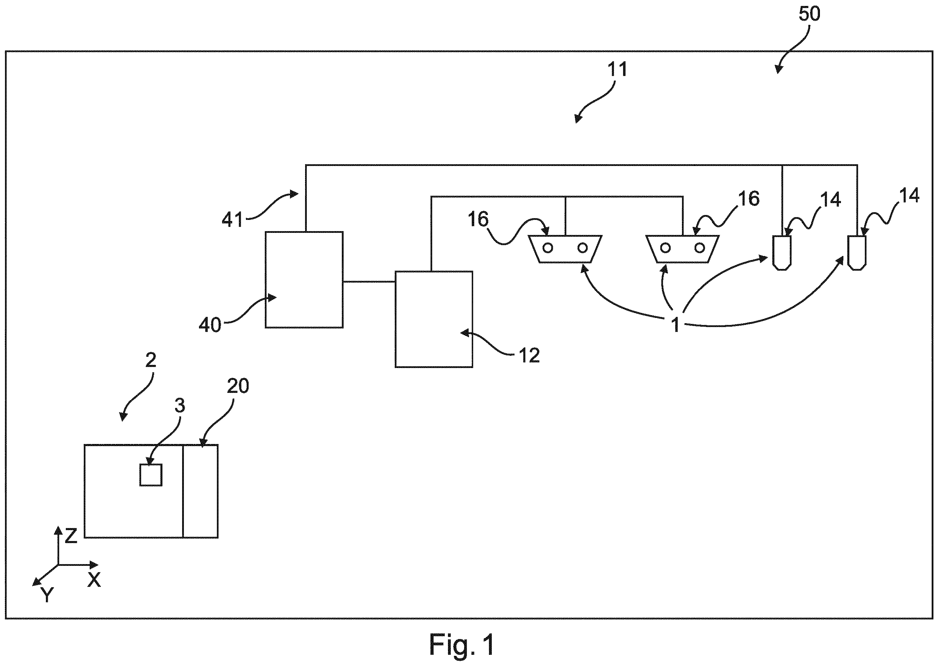

In der Fig. 1 ist eine Ausführungsform des unbemannten Fahrzeuges 2 zur Überprüfung einer Brandschutzkomponente 1 einer Brandschutzanlage 11 schematisch dargestellt, sowie die Umgebung in der es beispielsweise eingesetzt werden kann. Die zu überprüfende Brandschutzkomponente 1 ist in einer Brandschutzanlage 11 angeordnet, welche den Schutzbereich 50 überwacht und schützt. Die dargestellte Brandschutzanlage 11 ist hier beispielsweise eine kombinierte Brandmelde- und Löschanlage. Diese umfasst eine Brandmelder- und/oder Löschsteuerzentrale 12, die signalleitend mit den Brandschutzkomponenten 1 verbunden ist, die als Brandmelder 16 ausgebildet sind. Die Löschanlage umfasst die Löschmittelversorgungseinrichtung 40, die über Rohrleitungen 41 mit Brandschutzkomponenten 1, welche als Löschanlagenkomponenten 14, in diesem Fall als Düsen, ausgebildet sind.

Das unbemannte Fahrzeug 2 zur Überprüfung einer Brandschutzkomponente 1 einer Brandschutzanlage 11, umfasst eine Überprüfungsvorrichtung 20 zur Durchführung der Überprüfung der Brandschutzkomponente 1 und eine Navigationssteuereinheit 3, die zum Navigieren des unbemannten Fahrzeuges 2 zu der Brandschutzkomponente 1 ausgebildet und/oder konfiguriert ist, an welcher eine Überprüfung durchgeführt werden soll. Das unbemannte Fahrzeug 2 ist dazu ausgebildet und/oder konfiguriert, die Überprüfung der Brandschutzkomponente 1 nach Erreichen der Brandschutzkomponente 1 mittels der Überprüfungsvorrichtung 20 auszuführen.

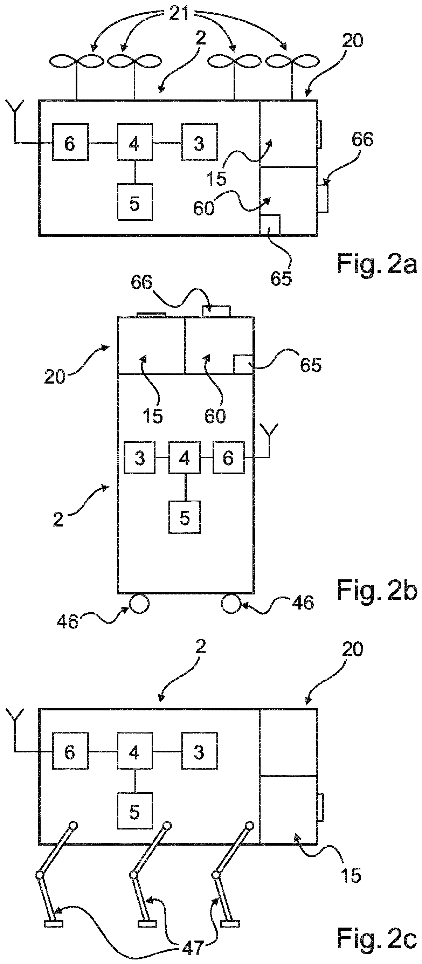

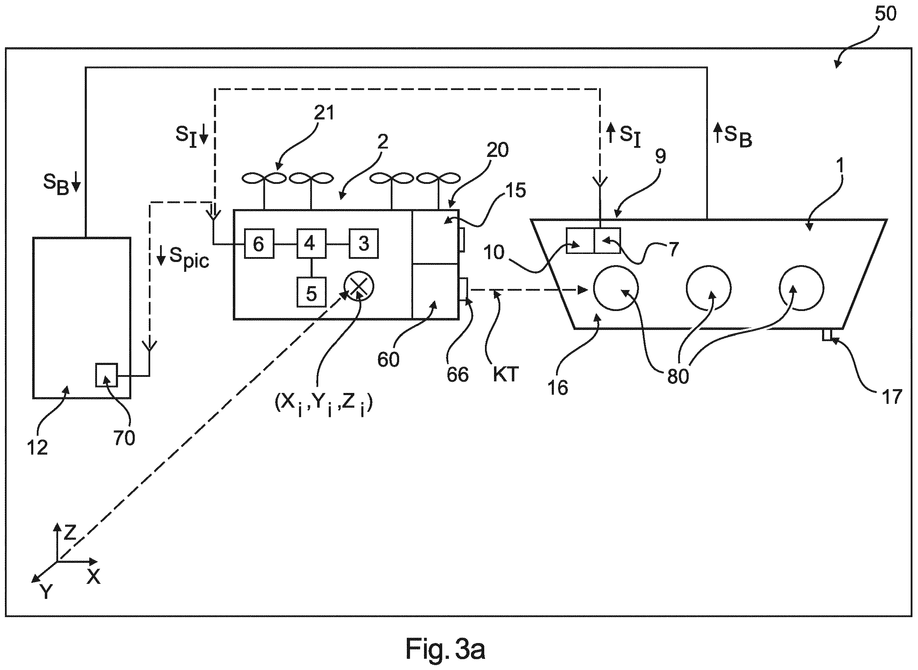

Fig. 2 zeigt schematisch beispielhafte Ausbildunggen des unbemannten Fahrzeuges 2. In Fig. 2a ist die Ausführungsform als Drohne dargestellt, hier vorzugsweise als Quadrocopter ausgebildet. Die Drohne weist als Quadrocopter Drehflügel 21 auf. Dieser Multicopter bietet den Vorteil, dass er sich, wie in Fig. 3a schematisch dargestellt, in einer der Brandschutzkomponente 1 zugeordneten Überprüfungsposition (xi, yi, zi) halten kann, um die Überprüfung durchzuführen. Die Brandschutzkomponente 1 ist in diesem Ausführungsbeispiel als Brandmelder 16 ausgebildet.

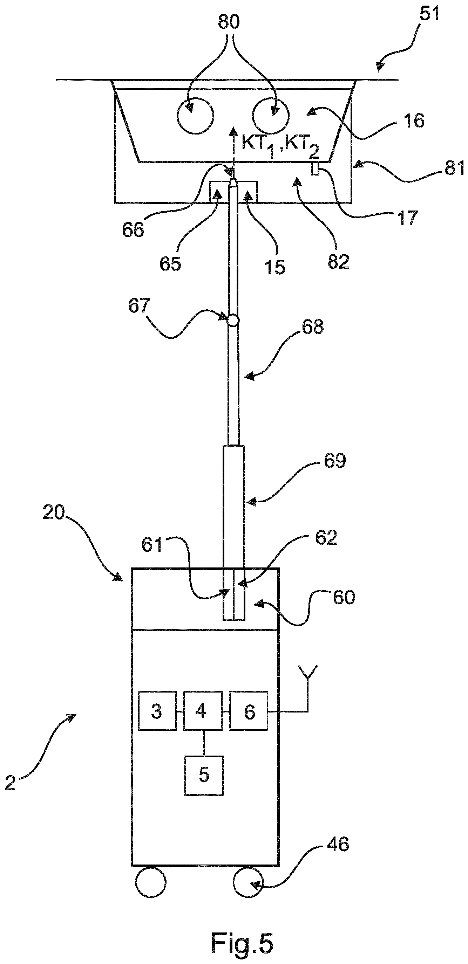

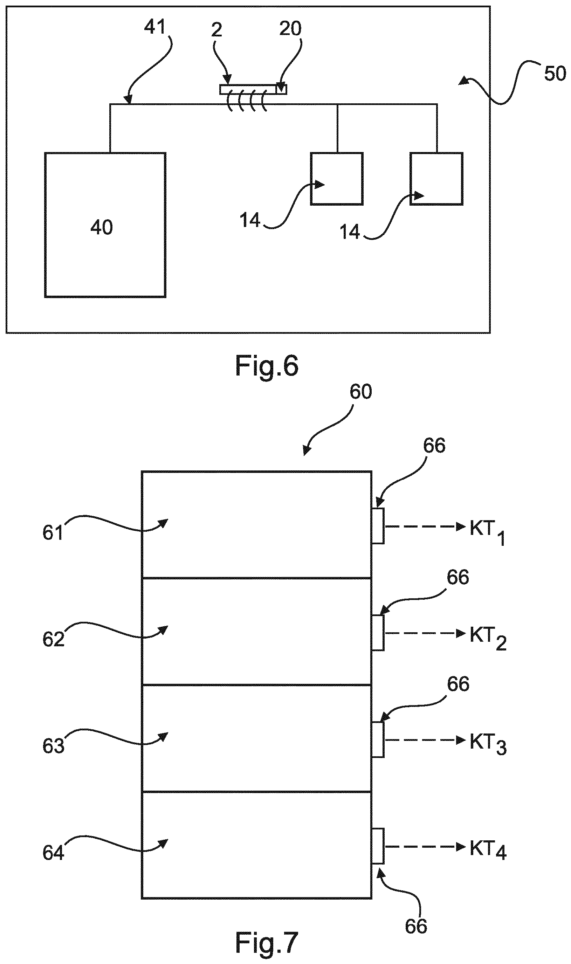

Die Ausführung des unbemannten Fahrzeuges 2 als Roboter ist schematisch in Fig. 2b und Fig. 5 dargestellt. Zum Fortbewegen weist dieser vier Räder 46 auf, von denen nur zwei dargestellt sind. Auch Ausführungen mit 3, 6 oder 8 Räder oder als Ketten- /Raupenfahrzeug stellen vorteilhafte Ausgestaltungen dar. Die Ausführungen des unbemannten Fahrzeuges 2 in Fig. 2a und Fig. 2b weisen vorzugsweise einen Schaltsignalerzeuger 65 auf. Dieser ist vorzugsweise als Permanentmagnet oder Elektromagnet ausgebildet, welcher bei Annäherung an die Brandschutzkomponente einen Reedschalter betätigt. Im Ausführungsbeispiel in Fig. 5 löst der Schaltsignalerzeuger 65, der hier vorzugsweise als Permanentmagnet ausgebildet ist, ein Schaltsignal im Brandmelder, welches vorzugsweise an eine Brandmelder- und/oder Löschsteuerzentrale gesendet wird (nicht dargestellt) und ein Testsignal repräsentiert. Die Ausführung des unbemannten Fahrzeuges 2 als Robot Crawler ist in Fig. 2c und auch in Fig. 6 schematisch dargestellt. Der beispielhafte Robot Crawler weist in Fig. 2c sechs mehrgliedrige Gelenkarme auf, von denen nur drei dargestellt sind, in Fig. 6 weist er acht Gelenkarme auf, wovon nur vier dargestellt sind. In der beispielhaften schematischen Darstellung in Fig. 6 navigiert der Robot Crawler entlang einer Rohrleitung 41. Diese verbindet die Löschmittelversorgungsvorrichtung 40 mit der als Löschanlagenkomponenten 14 ausgebildeten Brandschutzkomponente 1, hier beispielsweise als Sprinkler ausgebildet. Der Robot Crawler weist die Überprüfungsvorrichtung 20 zur Durchführung der Überprüfung der Löschanlagenkomponente 14, beispielsweise der Sprinkler, auf.

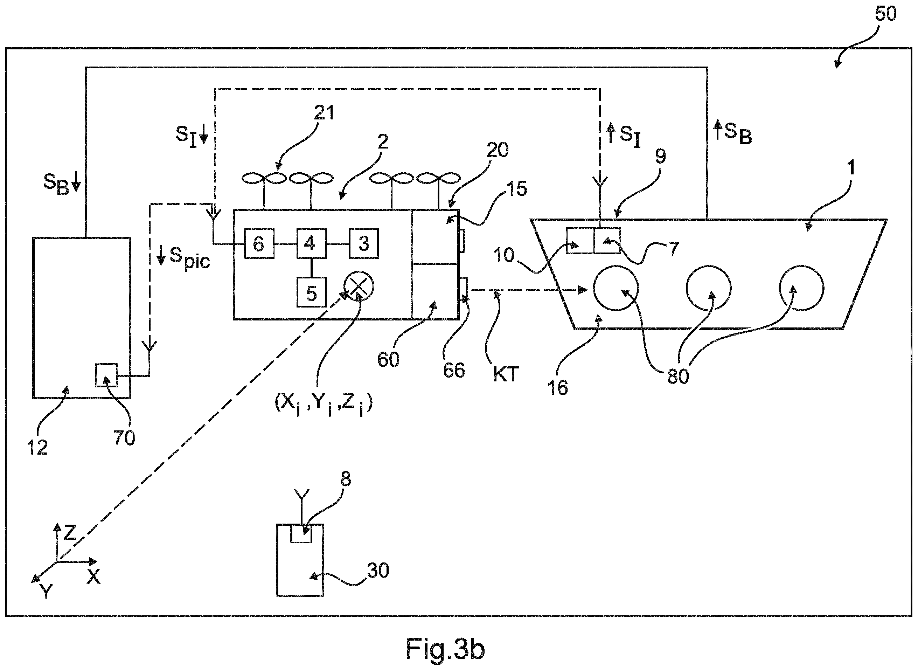

Das unbemannte Fahrzeug 2 weist in allen Ausführungsformen eine Rechnereinheit 4, einen Speicher 5 und eine erste Signalsende- und/oder Empfangseinheit 6 auf. Die erste Signalsende- und/oder Empfangseinheit 6 ist zum Empfang eines Navigationssteuersignals, insbesondere von einer Fernsteuerungsvorrichtung 30, welche in Fig. 3b dargestellt ist, ausgebildet. Mittels der Fernsteuerungsvorrichtung 30 kann beispielsweise das Servicepersonal das unbemannte Fahrzeug fernsteuern. Dies ist beispielsweise von Vorteil, bei auftretenden unvorhergesehenen Umgebungsbedingungen im nahen Umfeld einiger Brandschutzkomponenten z.B. nach Umbaumaßnahmen im Schutzbereich 50 oder bei zeitweise vorhandenen Hindernissen. Dann ist ein Eingriff des Service- oder des Instandhaltungspersonals beim Navigieren des unbemannten Fahrzeuges 2 zur Brandschutzkomponente 1 notwendig, um mit der Fernsteuerung 30 die Überprüfung an diesen Brandschutzkomponenten trotzdem erfolgreich auszuführen. Die Ausführungsvariante, bei der nur mittels der Fernsteuerungsvorrichtung 30 das Navigieren zur Brandschutzkomponente 1 erfolgt, stellt eine kostenoptimierte Variante dar.

Die Navigationssteuereinheit 3 ist dazu ausgebildet und/oder konfiguriert, das unbemannte Fahrzeug 2 zu der Brandschutzkomponente 1 oder einer der Brandschutzkomponenten, zu der zugeordneten Überprüfungsposition (xi, yi, zi), basierend auf dem Navigationssteuersignal zu navigieren.

In einer bevorzugten Version der Ausführungsvariante ist die Navigationssteuereinheit 3 dazu ausgebildet und konfiguriert, das unbemannte Fahrzeug 2 selbständig zu navigieren. Somit kann schnell, ohne Eingriff des Servicepersonals, das unbemannte Fahrzeug zur Brandschutzkomponente gelangen, an der die Überprüfung durchgeführt werden soll. Dies ist besonders vorteilhaft bei der Überprüfung einer größeren Anzahl von Brandschutzkomponenten, beispielsweise 50, 100 oder mehr.

Auch die Kombination der Ausführung zum selbständigen Navigieren und des Navigierens mit der Fernsteuerungsvorrichtung 30 ist eine besonders flexibel einsetzbare Ausführungsvariante, welche die oben genannten Vorteile kombiniert. Diese Ausführungsvariante ist dadurch gekennzeichnet, dass die Navigationssteuereinheit 3 zum selbstständigen Navigieren des unbemannten Fahrzeuges 2 und zum Navigieren des Fahrzeuges basierend auf dem Navigationssteuersignal ausgebildet und/oder konfiguriert ist.

Zur Uberprüfung der Brandschutzkomponenten sind erfindungsgemäß Identifikationsdaten der zu überprüfenden Brandschutzkomponente notwendig. Die Identifikationsdaten 10 repräsentieren erfindungsgemäß einen Typ der Brandschutzkomponente 1, sowie optional eine Artikelnummer der Brandschutzkomponente 1, Fertigungsdaten der Brandschutzkomponente 1, ein Herstelldatum der Brandschutzkomponente 1, eine Seriennummer der Brandschutzkomponente 1, eine Softwareversion der Brandschutzkomponente 1, ein Datum der letzten Überprüfung der Brandschutzkomponente 1, Testkenngrößendaten der Brandschutzkomponente 1, Positionsdaten der Brandschutzkomponente 1, und erfindungsgemäß eine zugeordnete Überprüfungsposition (xᵢ, yᵢ, zᵢ) der Brandschutzkomponente 1 und/oder weisen diese vorzugsweise auf. Um nicht die Identifikationsdaten der zu überprüfenden Brandschutzkomponenten 1 alle im unbemannten Fahrzeug speichern zu müssen, werden in einer vorteilhaften Ausgestaltung der Erfindung, diese Identifikationsdaten 10, vorzugsweise bei Bedarf, von der Brandschutzkomponente 1 erhalten, vorzugsweise an das unbemannte Fahrzeug 2 gesendet.

Erfindungsgemäß ist hierfür die erste Signalsende- und/oder Empfangseinheit 6 oder eine weitere Signalsende- und/oder Empfangseinheit 6a (nicht dargestellt) des unbemannten Fahrzeuges 2 zum, insbesondere drahtlosen, Empfang eines Identifikationssignals S_{I} ausgebildet, was schematisch in Fig. 3a und Fig. 3b dargestellt ist.

Das Identifikationssignal S_{I} repräsentiert die Identifikationsdaten 10 zur Charakterisierung und/oder Identifikation der oder der mindestens einen Brandschutzkomponente 1. Das unbemannte Fahrzeug 2 ist ausgebildet und/oder konfiguriert, zum Ausführen der

Überprüfung der jeweiligen Brandschutzkomponente 1 basierend auf den entsprechenden Identifikationsdaten 10. Vorzugsweise werden die Identifikationsdaten 10 vom unbemannten Fahrzeug 2 bei Annäherung an die Brandschutzkomponente 1 abgerufen oder empfangen und vorzugsweise im Speicher 5 des unbemannten Fahrzeuges 2 gespeichert.

Wie in Fig. 3a und 3b schematisch dargestellt, sind die Identifikationsdaten 10 vorzugsweise in einem Funkidentifikationsmittel 9, welches am oder in der Brandschutzkomponente 1 angeordnet ist, gespeichert. Im dargestellten Beispiel in Fig. 3a oder 3b ist nur eine von einer Vielzahl von Brandschutzkomponenten 1 der Brandschutzanlage 11 dargestellt und zwar die Ausbildung dieser Brandschutzkomponente 1 als Brandmelder 16.

Die erste Signalsende- und/oder Empfangseinheit 6 oder die weitere Signalsende- und/oder Empfangseinheit 6a (nicht dargestellt) des unbemannte Fahrzeuges 2 ist vorzugsweise ausgebildet und/oder konfiguriert, das Identifikationssignal S_{I} von dem Funkidentifikationsmittel 9 zu empfangen, welches beispielsweise als NFC-Tag oder als RFID-Tag ausgebildet ist.

Nach Auswertung der erhaltenen Identifikationsdaten 10, wertet das unbemannte Fahrzeug 2, insbesondere mittels der Rechnereinheit 4 diese aus, erfindungsgemäß den Typ der Brandschutzkomponente 1 und optional die Testkenngrößendaten und führt die zu diesen

Daten hinterlegte Art der Überprüfung an dieser Brandschutzkomponente 1 aus. Hierzu ist das unbemannte Fahrzeug 2 entsprechend ausgebildet und/oder konfiguriert. Insbesondere ist das unbemannte Fahrzeug 2 dazu ausgebildet und/oder konfiguriert, ein Aktivierungssignal S_{A} zu generieren, insbesondere wenn das unbemannte Fahrzeug 2 die jeweilige Brandschutzkomponente 1 und/oder die zugehörige Überprüfungsposition (xᵢ, y_{i;} zᵢ) erreicht, und die Überprüfung der jeweiligen Brandschutzkomponente aktiviert, wenn und/oder sobald das Aktivierungssignal S_{A} generiert ist. Somit erfolgt nach eindeutiger Identifikation der Brandschutzkomponente 1 die Durchführung der für diese Brandschutzkomponente vorgesehenen Überprüfung. Dies ist von Vorteil für eine schnelle und kosteneffiziente Durchführung der Überprüfung einer Vielzahl von Brandschutzkomponenten. Beim Ablaufen der Brandschutzkomponenten durch das Servicepersonal ist es ohne Hilfsmittel oft nicht möglich den Typ der Brandschutzkomponente festzustellen, welche in großer Höhe installiert ist, und beispielsweise festzustellen ob es sich um einen Rauchmelder, Gasmelder, Wärmemelder oder Multisensormelder handelt, die sich äußerlich nicht unterscheiden. Somit wird bei der im Stand der Technik üblichen Begehung die Auswahl des notwendigen Überprüfungs- oder Testmittels verzögert, was zu langen kostenaufwendigen Überprüfungen führt.

Zur Durchführung der Überprüfung weist das unbemannte Fahrzeug 2, insbesondere die Überprüfungsvorrichtung 20, eine Bilderfassungsvorrichtung 15 und/oder eine Testvorrichtung 60 auf, wie es in den Figuren 2a bis 2c sowie Fig. 3a und 3b schematisch dargestellt ist. Die Testvorrichtung 60 erzeugt eine Testkenngröße KT, insbesondere zur Testauslösung von Brandmeldern. Wie in den Fig. 3a und 3b dargestellt, weist die Testvorrichtung 60 einen Testkenngrößenaustritt 66 für einen Austritt der Testkenngröße KT auf.

Die Bilderfassungsvorrichtung 15 ist vorzugsweise zur Erfassung eines Bildes und zur Erzeugung korrespondierender Bilddaten S_{pic} einer zuvor erreichten Brandschutzkomponente 1 ausgebildet und/oder konfiguriert. In einer besonders bevorzugten Ausführungsvariante ist die Überprüfungsvorrichtung 20 ausgebildet und/oder konfiguriert die Funktionsfähigkeit der Brandschutzkomponente 1 basierend auf den Bilddaten S_{pic} selbständig durchzuführen. Hierzu werden die Bilddaten S_{pic} in der Bilderfassungsvorrichtung oder im Speicher 5 des unbemannten Fahrzeuges gespeichert und mit gespeicherten Vergleichsdaten verglichen. So kann ein Bild der Glasampulle eines Sprinklers ausgewertet werden, ob eine Beschädigung der Halterung der der Glasampulle oder der Glasampulle selbst vorliegt. Das Bild eines Brandmelders kann beispielsweise eine unzulässige Farbbeschichtung durch Malerarbeiten erkennen lassen, insbesondere über Eintrittsöffnungen für Brandkenngrößen, was auf eine Funktionsunfähigkeit schließen lässt.

Das unbemannte Fahrzeug 2 ist in einer weiteren Ausführungsvariante zur Übertragung der Bilddaten S_{pic}, insbesondere mittels der ersten Signalsende- und/oder Empfangseinheit 6, mit einer Zentrale 12 drahtlos verbunden, was in der Fig. 3a und Fig. 3b schematisch dargestellt ist. Zusätzlich oder alternativ kann die Übertragung der Bilddaten S_{pic} an die Fernsteuerungsvorrichtung 30 erfolgen. Die Bilddaten S_{pic} werden dort vorzugsweise gespeichert. Dies bietet die Möglichkeit eine Bildauswertung bzw. Bildvergleich mit Hilfe von in der Zentrale und/oder der Fernsteuerungsvorrichtung hinterlegten Vergleichsdaten, durchzuführen. Alternativ erfolgt die Bildauswertung visuell durch das Service- oder Instandhaltungspersonal. Hierzu können das erfasste Bild oder die erfassten Bilder der Brandschutzkomponenten sowie vorzugsweise auch der Vergleichsdaten mit einer Anzeigevorrichtung der Zentrale 12 oder der Fernsteuerungsvorrichtung 30 dargestellt werden.

Eine beispielhafte Testvorrichtung 60 ist in Fig. 7 schematisch dargestellt. Diese dargestellte Testvorrichtung umfasst einen Aerosolerzeuger 61, einen Gaserzeuger 62, eine Strahlungsquelle 63, einen Wärmeerzeuger 64.

Als Testkenngröße KT ist bzw. sind erzeugbar, beispielsweise vom Aerosolerzeuger ein Aerosolstrom KT_{1;} und/oder vom Gaserzeuger ein Testgas KT₂, und/oder von der Strahlungsquelle eine elektromagnetische Strahlung KT₃, und/oder von dem Wärmeerzeuger eine Wärmestrahlung KT₄. In diesem Beispiel weist die Testvorrichtung vier Testkenngrößenaustritte 66 auf.

Die Testvorrichtung 60 ist ausgebildet und/oder konfiguriert zum Erzeugen der Testkenngröße KT, vorzugsweise nach Erhalt des Aktivierungssignals S_{A}.

Alle Ausgestaltungsvarianten der Testvorrichtung 60 sind zum Durchführen der Überprüfung dazu konfiguriert und/oder ausgebildet die Testkenngröße KT zu erzeugen, die vorzugsweise durch den Testkenngrößenaustritt 66 ausbringbar ist. Der Testkenngrößenaustritt 66 ist beispielsweise eine Öffnung, vorzugsweise eine kreisförmige Öffnung, durch die die jeweilige Testkenngröße KT ausbringbar ist. Vorzugsweise erfolgt das Erzeugen und/oder Ausbringen der Testkenngröße nach Erhalt des Aktivierungssignals S_{A}.

In einer weiteren vorteilhaften Ausgestaltung der Testvorrichtung 60 sind mehrere Testkenngrößen durch nur einen Testkenngrößenaustritt 66 ausbringbar, wie im Beispiel der schematischen Darstellung in Fig. 5, in welcher das unbemannte Fahrzeug 2, in der beispielhaften Ausgestaltung als Roboter mit Rädern 46 dargestellt ist, und die Testvorrichtung 60 einen Aerosolerzeuger 61 und einen Gaserzeuger 62 aufweist.

Fig. 7 zeigt eine Ausführungsvariante einer Testvorrichtung 60 eines unbemannten Fahrzeuges 2, die dadurch gekennzeichnet ist, dass die Testvorrichtung 60 zum, insbesondere synchronen oder sequentiellen, Erzeugen von vier verschiedenen Testkenngrößen KT ausgebildet und/oder konfiguriert ist. Im dargestellten Beispiel, treten diese vier Testkenngrößen KT_{1;} KT₂, KT₃ und KT₄ aus je einem zugehörigen Testkenngrößenaustritt 66 aus.

In den in den Figuren 3a und 3b dargestellten Ausführungsvarianten, ist die Testvorrichtung 60 des unbemannten Fahrzeuges 2 dazu ausgebildet und/oder konfiguriert, die Erzeugung der mindestens einen Testkenngröße KT basierend auf dem Identifikationssignal S_{I} zu kontrollieren, insbesondere eine zeitliche Abfolge der Erzeugung und/oder Ausbringung der Testkenngrößen KT, sofern mehrere Testkenngrößen KT, wie in Fig. 7 dargestellt, vorgesehen sind. Das Identifikationssignal S_{I}, welches bei Annäherung des unbemannten Fahrzeuges 2 an die Brandschutzkomponente 1, hier ausgebildet als Brandmelder 16 im Schutzbereich 50, wird von einem beispielsweise als RFID-Tag ausgebildeten Funkidentifikationsmittel 9 gesendet und von der ersten Signalsende- und/oder Empfangseinheit 6 des unbemannten Fahrzeuges 2 empfangen. Der in Fig. 3a dargestellte Brandmelder 16 ist beispielsweise ein Rauchmelder, so dass das Identifikationssignal S_{I} Testkenngrößendaten aufweist, die es ermöglichen die Testkenngrößenerzeugung hierauf basierend zu kontrollieren und die notwendige Testkenngröße Aerosolstrom oder Prüfaerosol zur Testauslösung des Brandmelders 16 über den Testkenngrößenaustritt 66 auszubringen. Vor der Ausbringung der Testkenngröße hat das unbemannte Fahrzeug 2, basierend auf den erhaltenen Identifikationsdaten S_{I} die zugeordnete Überprüfungsposition (xᵢ, yᵢ, zᵢ) eingenommen, welche eine zuverlässige Überprüfung der Brandschutzkomponente 1 ermöglicht, hier beispielsweise die Testauslösung des Brandmelders 16.

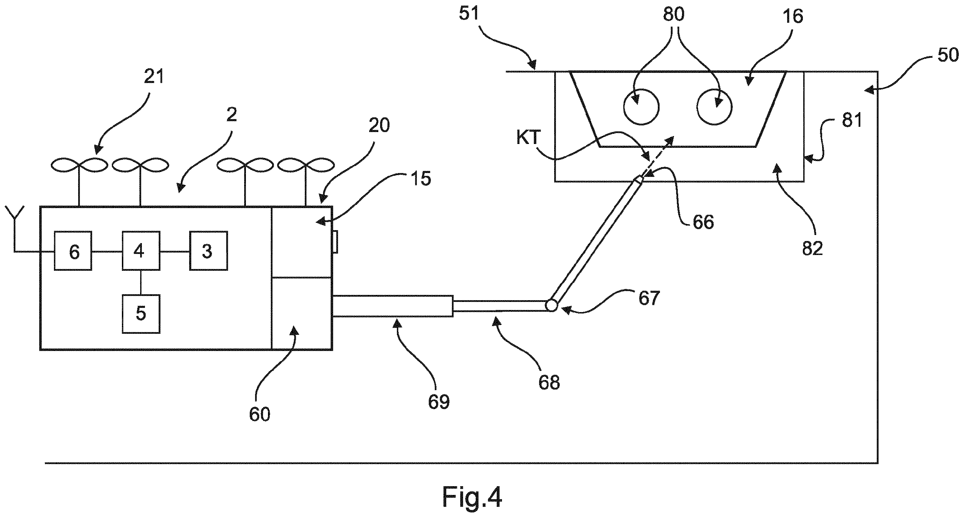

In Fig. 4 und Fig. 5 sind Ausführungen des unbemannten Fahrzeuges 2 dargestellt, in welchen das Fahrzeug 2, insbesondere die Testvorrichtung 60, eine dreh-, schwenk- und/oder längenverstellbare Ausrichtungsvorrichtung 68 aufweist. An dieser Ausrichtungsvorrichtung 68 ist der Testkenngrößenaustritt 66 angeordnet und hier beispielhaft an einem von dem Fahrzeug 2 abgewandten Endabschnitt der Ausrichtungsvorrichtung 68. Das unbemannte Fahrzeug 2, vorzugsweise die Testvorrichtung 60, ist zur Steuerung der Ausrichtungsvorrichtung 68 ausgebildet und/oder konfiguriert, um den Testkenngrößenaustritt 66, insbesondere zu oder relativ zu der jeweiligen Brandschutzkomponente 1, auszurichten.

Die Ausrichtungsvorrichtung 68 kann eine von einem Aktuator steuerbare Gelenkeinheit 67 und/oder eine teleskopartig längenverstellbare Vorrichtung 69 aufweisen, so dass durch Steuerung des Aktuators ein Verdrehen, ein Verschwenken und/oder ein Höhenverstellen des Testkenngrößenaustritts 66 ermöglicht wird (s. Fig. 4 und Fig. 5).

Mit der Ausrichtung des Testkenngrößenaustritts 66 mittels der Ausrichtungsvorrichtung 68 wird erreicht, dass die Testkenngröße KT nach dem Austritt aus dem Testkenngrößenaustritt 66, vorzugsweise auf kürzestem Weg und in kürzester Zeit, in die Brandkenngrößeneintrittsöffnung 80 des Brandmelders gelangt, um eine Testauslösung des Brandmelders zu erreichen (siehe Fig. 4 und Fig. 5).

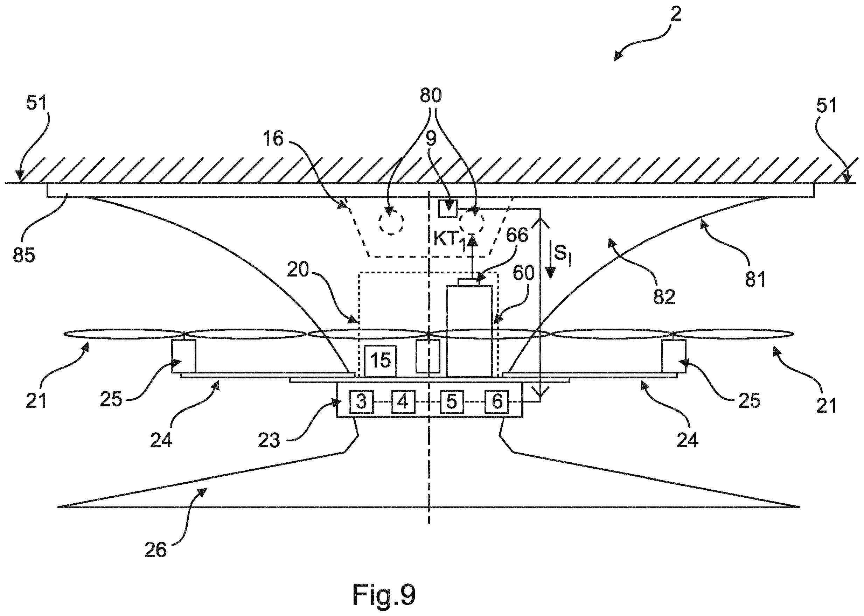

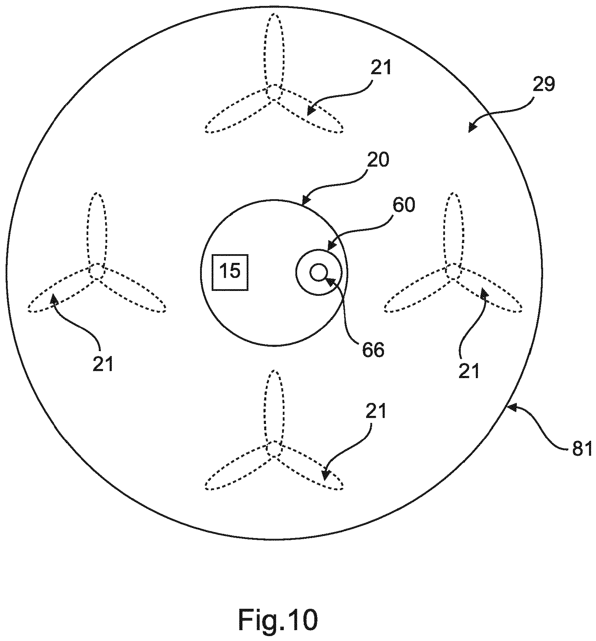

In Fig. 9 und 10 ist ein unbemanntes Fahrzeug 2 in der Ausbildung als Drohne, hier beispielsweise als Quadrocopter ausgeführt, schematisch dargestellt. Das unbemannte Fahrzeug 2 ist in der Position dargestellt, in der die Überprüfung einer Brandschutzkomponente 1 durchgeführt wird. Im dargestellten Beispiel ist die Brandschutzkomponente 1 als Brandmelder 16 ausgebildet, welche an der Decke 51 eines Schutzbereiches 50 (nicht dargestellt) angeordnet ist. Als Überprüfung ist vorzugsweise die Testauslösung des Brandmelders vorgesehen. In dieser beispielhaften Ausführung weist das unbemannte Fahrzeug 2 eine Abschirmungsvorrichtung 81 auf. In diesem Beispiel ist die Abschirmungsvorrichtung 81 als Trichteraufsatz ausgebildet. Die Abschirmungsvorrichtung 81 ist dazu ausgebildet, um die Brandschutzkomponente 1, hier als Brandmelder 16 ausgebildet, herum ein definiertes Testkenngrößenausbreitungsvolumen 82 auszubilden. Das unbemannte Fahrzeug 2 weist vorzugsweise, wie dargestellt, eine Rechnereinheit 4, einen Speicher 5 und eine erste Signalsende- und/oder Empfangseinheit 6 auf, welche vorzugsweise im oder am Grundkörper 23 der Drohne angeordnet sind. Die erste Signalsende- und/oder Empfangseinheit 6 oder eine weitere Signalsende- und/oder Empfangseinheit 6a (nicht dargestellt) des unbemannten Fahrzeuges 2 ist bzw. sind vorzugsweise ausgebildet und/oder konfiguriert, das Identifikationssignal S_{I} von dem Funkidentifikationsmittel 9 der Brandschutzkomponente 1, hier des Brandmelders 16, zu empfangen, welches beispielsweise als NFC-Tag oder als RFID-Tag ausgebildet ist. Das unbemannte Fahrzeug 2 weist eine Überprüfungsvorrichtung 20 auf, mit einer Testvorrichtung 60, welche eine Testkenngröße KT, hier beispielsweis KT₁ als Aerosolstrom oder Prüfaerosol durch den Testkenngrößenaustritt 66 ausbringt. Der Trichteraufsatz 81 ist durch das Navigieren des unbemannten Fahrzeuges 2 so positioniert, dass die Trichteröffnung komplett den Brandmelder 16 umfassend, an die Decke 51 gedrückt wird. Mindestens eine Brandkenngrößeneintrittsöffnung 80, hier vorzugsweise zwei, sind vom definierten Testkenngrößenausbreitungsvolumen 82 umschlossen. Weiterhin weist in diesem Ausführungsbeispiel die Überprüfungsvorrichtung einen Bilderfassungsvorrichtung 15 auf.

Die Abschirmungsvorrichtung 81, hier der Trichteraufsatz, kanalisiert die Testkenngröße KT, hier beispielsweise den Aerosolstrom KT_{1;} insbesondere Prüfaerosol vom Testkenngrößenaustritt 66 zu der Brandkenngrößeneintrittsöffnung 80. Die ausgebrachte Quantität der Testkenngröße und das definierte Testkenngrößenausbreitungsvolumen 82 ermöglichen die Testauslösung des Brandmelders 16.

Weiterhin sind im schematisch dargestellten Ausführungsbeispiel des unbemannten Fahrzeuges 2 als Drohne in Fig. 9 die Drehflügel 21 dargestellt, welche über Antriebsmotore 25 angetrieben werden. Die Antriebsmotore 25 sind an Auslegern 24 befestigt, welche am Grundkörper 23 angeordnet sind. Zum sicheren Landen ist vorzugsweise am Grundkörper 23 ein Landegestell 26 angeordnet.

Die Abschirmungsvorrichtung 81, im Beispiel der schematischen Darstellungen in Fig. 9 und Fig. 10 vorzugsweise als Trichteraufsatz ausgebildet, hat vorzugsweise eine Doppelfunktion, nämlich die Bildung des definierten Testkenngrößenausbreitungsvolumens und die Umleitung des von den Drehflügeln und der Flugbewegung der Drohne erzeugten Luftströmung.

Die besonders bevorzugte Ausbildung der Abschirmungsvorrichtung 81 als Trichteraufsatz, leitet wegen des in senkrechter Flugrichtung größer werdenden Durchmessers der Trichterwandung, die Luftströmung besonders effektiv um, damit die Sogwirkung zur Decke 51, welche durch die von den Drehflügeln 21 erzeugte Luftströmung entsteht, verringert oder verhindert wird. Im dargestellten Beispiel der Fig. 10 weist die Abschirmungsvorrichtung einen Dichtrand 85 auf, beispielsweise aus Silikon. So wird erreicht, dass beim Andrücken der Abschirmungsvorrichtung 81 an die Decke 51, die Testkenngröße KT, beispielsweise KT_{1;} sich nahezu nur, oder vollständig, im gebildeten definierten Testkenngrößenausbreitungsvolumen 81 ausbreiten kann.

Wie in Fig.10 schematisch dargestellt, weist die Abschirmungsvorrichtung 81, vorzugsweise der dargestellte Trichteraufsatz des unbemannten Fahrzeuges 2, ausgebildet als Drohne mit Drehflügeln 21, eine Projektionsfläche 29 senkrecht zu den Drehachsen der Drehflügel 21 auf, welche, betrachtet in Richtung der Drehachsen der Drehflügel 21, die von den Drehflügeln 21 überstrichene Fläche zumindest teilweise überlappt, hier in diesem Beispiel vorzugsweise vollständig. Dies ermöglicht die beschriebene Umlenkung der Luftströmung.

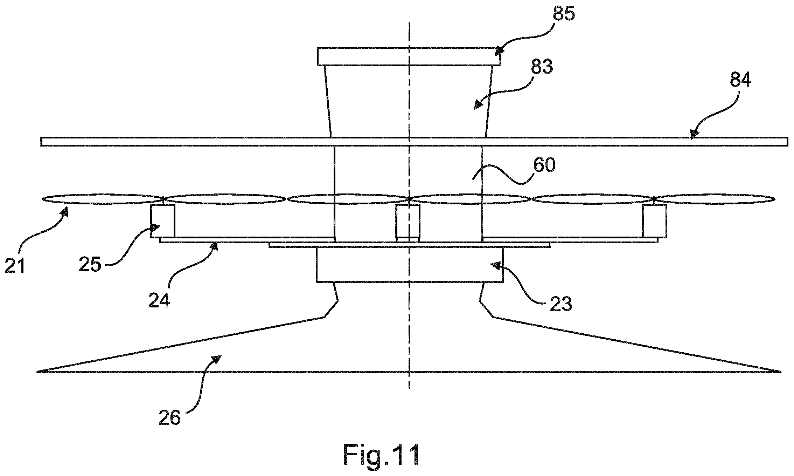

Ein weiteres Ausführungsbeispiel eines unbemannten Fahrzeuges 2 mit einer Abschirmungsvorrichtung 81 ist in Fig. 11 dargestellt. Die Abschirmungsvorrichtung 81 weist ein erstes Abschirmelement 83 und eine zweites Abschirmelement 84 auf. Das erste Abschirmelement 83 ist dazu ausgebildet, das definierte Testkenngrößenausbreitungsvolumen 82 auszubilden. Das zweite Abschirmelement 83 weist die Projektionsfläche 29 senkrecht zu den Drehachsen der Drehflügel 21 auf, welche, betrachtet in Richtung der Drehachsen der Drehflügel 21, die von den Drehflügeln 21 überstrichene Fläche zumindest teilweise überlappt, in diesem Beispiel vollständig (nicht dargestellt, aber analog wie in der Ausführungsvariante in Fig. 10). Das erste Abschirmelement 83 ist im dargestellten Beispiel in Fig. 11 als Kappe ausgebildet und das zweite Abschirmelement 84 ist als Scheibe ausgebildet. Vorzugsweise weist die Kappe einen Dichtrand 85 auf, beispielsweise aus Silikon. So wird analog zum Ausführungsbeispiele in Fig. 9 erreicht, dass beim Andrücken der Abschirmungsvorrichtung 81 an einen Brandmelder, die Testkenngröße KT, beispielsweise KT_{1;} sich nahezu nur, oder vollständig, im gebildeten definierten Testkenngrößenausbreitungsvolumen 81 ausbreiten kann.

Die in den Fig. 4 und Fig. 5 schematisch dargestellten Ausführungsvarianten des unbemannten Fahrzeuges 2 sind gekennzeichnet dadurch, dass die Testvorrichtung 60 eine Abschirmungsvorrichtung 81 aufweist, welche den Testkenngrößenaustritt 66 und die Brandkenngrößeneintrittsöffnung 80 des Brandmelders umschließen kann, hier vorzugsweise umschließt und das definierte Testkenngrößenausbreitungsvolumen 82 ausbildbar ist. Vorzugsweise kanalisiert die Abschirmungsvorrichtung 81 die Testkenngröße KT vom Testkenngrößenaustritt 66 zu der Brandkenngrößeneintrittsöffnung 80, insbesondere durch das gebildete Testkenngrößenausbreitungsvolumen 82. Dadurch wird erreicht, dass eine ausreichende Quantität der Testkenngröße durch die Brandkenngrößeneintrittsöffnung 80 zum Sensor oder den Sensoren des Brandmelders gelangt, um eine erfolgreiche Testauslösung zu gewährleisten. In den in Fig. 4 und Fig. 5 dargestellten Ausführungsvarianten ist die Abschirmungsvorrichtung als Kappe ausgebildet.

In der schematischen Darstellung der Fig. 4, ist der Brandmelder 16 an der Decke 51 montiert dargestellt. Mittels der Ausrichtungsvorrichtung 68 wird die Abschirmungsvorrichtung 81, hier vorzugsweise die Kappe so positioniert, dass sie vorzugsweise nahezu luftdicht abschließend an die Decke gepresst wird und das definierte Testkenngrößenausbreitungsvolumen 82 zwischen der Decke 51, der Innenwandung der Abschirmungsvorrichtung 81 und dem Brandmelder 16 gebildet wird. Der Brandmelder 16 wir hierbei von der Abschirmungsvorrichtung 81 vollständig umfasst.

In der schematischen Darstellung der Fig. 5, ist der Brandmelder 16 ebenfalls an der Decke montiert dargestellt, aber auch eine Montage des Brandmelders an einer Unterkonstruktion ist hier denkbar. Mittels der Ausrichtungsvorrichtung 68 wird in dieser Ausführungsvariante die Abschirmungsvorrichtung 81, hier vorzugsweise die Kappe so positioniert, dass sie nahezu luftdicht abschließend an das Gehäuse des Brandmelders 16 gepresst wird und das definierter Testkenngrößenausbreitungsvolumen 82 zwischen der Innenwandung der Abschirmungsvorrichtung 81 und dem Brandmelder 16 gebildet wird. Der Brandmelder 16 wird hierbei von der Abschirmungsvorrichtung 81 teilweise umfasst, vorzugsweise derart, dass mindestens eine oder alle Brandkenngrößeneintrittsöffnungen 80 innerhalb des definierten Testkenngrößenausbreitungsvolumens 82 liegen.

Die Verwendung der Abschirmungsvorrichtung 81 und die Bildung des definierten Testkenngrößenausbreitungsvolumens 82 ist besonders vorteilhaft bei der Verwendung der Testkenngrößen Aerosolstrom oder Prüfaerosol KT₁ und Testgas KT₂. Ohne Abschirmungsvorrichtung 81 und die Bildung des definierten Testkenngrößenausbreitungsvolumens 82 würde sich der Aerosolstrom oder das Prüfaerosol oder das Testgas unkontrolliert in der Umgebung des Brandmelders ausbreiten, insbesondere wenn das unbemannte Fahrzeug als Drohne ausgebildet ist, dessen Drehflügel die Umgebungsluft des Brandmelders verwirbelt.

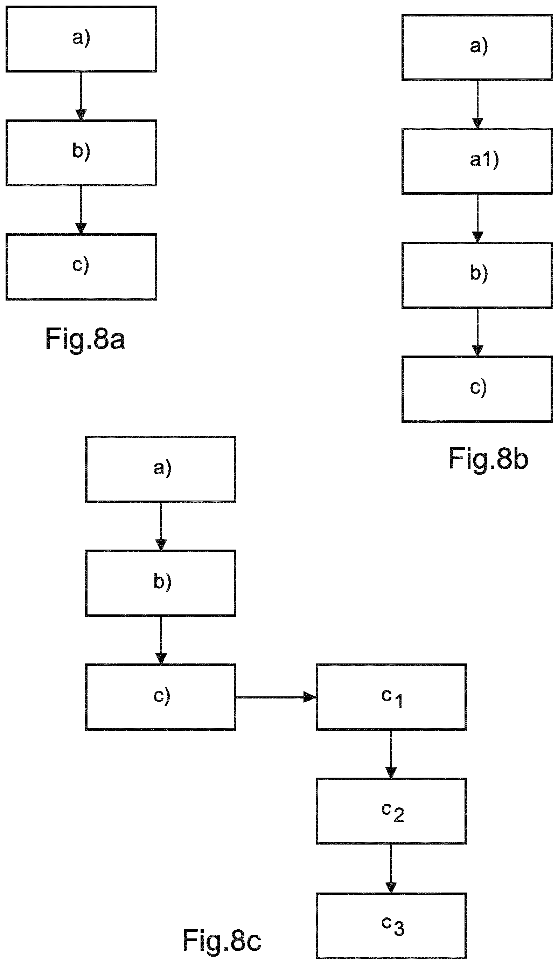

Gemäß dem ersten Aspekt der Erfindung ist ein Verfahren zur Überprüfung einer Brandschutzkomponente 1 einer Brandschutzanlage 11 vorgesehen, wobei die Schritte des Verfahrens schematisch in der Fig. 8a dargestellt sind.

Gemäß einem Schritt a) des Verfahrens ist ein Bereitstellen eines unbemannten Fahrzeuges 2 vorgesehen.

Gemäß einem Schritt b) ist ein Navigieren des unbemannten Fahrzeuges 2 mittels einer Navigationssteuereinheit 3 des unbemannten Fahrzeuges 2 zu der Brandschutzkomponente 1, an welcher eine Überprüfung durchgeführt werden soll, vorgesehen.

Ferner ist gemäß einem Verfahrensschritt c) die Durchführung der Überprüfung an der Brandschutzkomponente 1 mittels einer Überprüfungsvorrichtung 20 des unbemannten Fahrzeuges 2 vorgesehen.

Soweit es sinnvoll ist, wird für die Schritte a) bis c) auf die vorangegangenen

Erläuterungen, beanspruchten und bevorzugten Merkmale, Effekte und/oder Vorteile, und Ausgestaltungen wie sie zuvor für das unbemannte Fahrzeug 2 erörtert worden sind, in analoger Weise Bezug genommen.

Gemäß der Erfindung ist es vorgesehen, dass das unbemannte Fahrzeug 2 in Schritt b) derart zu der Brandschutzkomponente 1 navigiert wird, so dass das unbemannte Fahrzeug 2 in einer der Brandschutzkomponente 1 zugeordneten Überprüfungsposition (xᵢ, yᵢ, zᵢ) angeordnet ist. Auch hier wird auf die vorangegangenen Erläuterungen, bevorzugten Merkmale, Effekte und/oder Vorteile, wie sie zuvor für das unbemannte Fahrzeug 2 erörtert worden sind, in analoger Weise Bezug genommen.

Gemäß einer weiteren vorteilhaften Ausgestaltung des Verfahrens ist es vorgesehen dass die Brandschutzanlage 11 mehrere Brandschutzkomponenten 1 aufweist, für die jeweils eine Überprüfung vorgesehen ist, wobei die Schritte b) und c) nacheinander für jede der Brandschutzkomponenten als die jeweilige Brandschutzkomponente 1, für die eine Überprüfung ausgeführt werden soll, ausgeführt werden.

Eine weitere vorteilhafte Ausgestaltung des Verfahrens ist in Fig. 8b gezeigt. Dabei zeichnet sich das Verfahren durch den weiteren Schritt a1) aus. Gemäß Schritt a1) erfolgt ein Empfang eines Navigationssteuersignals, beispielsweise von einer Fernsteuerungsvorrichtung 30, mittels einer ersten Signalsende- und/oder Empfangseinheit 6 des unbemannten Fahrzeuges 2, wobei das Navigieren des Fahrzeuges 2 in Schritt b) basierend auf dem Navigationssteuersignal erfolgt, und der Schritt a1) zwischen dem Schritt a) und b) ausgeführt wird. Für den Schritt a1) wird auf die vorangegangenen Erläuterungen, bevorzugten Merkmale, Effekte und/oder Vorteile, wie sie zuvor für das unbemannte Fahrzeug 2 erörtert worden sind, in analoger Weise Bezug genommen.

Gemäß einer weiteren vorteilhaften Ausgestaltung des Verfahrens ist es vorgesehen, dass das Navigieren in Schritt b) selbständig mittels der Navigationssteuereinheit 3 erfolgt. Auch hier wird auf die vorangegangenen Erläuterungen, bevorzugten Merkmale, Effekte und/oder Vorteile, wie sie zuvor für das unbemannte Fahrzeug 2 erörtert worden sind, in analoger Weise Bezug genommen.

Gemäß einer weiteren vorteilhaften Ausgestaltung des Verfahrens ist es vorgesehen, dass das Navigieren in Schritt b) durch eine Kombination aus dem Navigieren des unbemannten Fahrzeuges 2 basierend auf dem Navigationssteuersignal und dem selbständigen Navigieren mittels der Navigationssteuereinheit 3 erfolgt. Auch hier wird wiederum auf die vorangegangenen Erläuterungen, bevorzugten Merkmale, Effekte und/oder Vorteile, wie sie zuvor für das unbemannte Fahrzeug 2 erörtert worden sind, in analoger Weise Bezug genommen.

Gemäß einer weiteren vorteilhaften Ausgestaltung des Verfahrens ist es vorgesehen, dass die Überprüfungsvorrichtung 20 eine Testvorrichtung 60 zum Erzeugen einer Testkenngröße KT aufweist, wobei die Testvorrichtung einen Testkenngrößenaustritt 66 für einen Austritt der Testkenngröße KT aufweist und die Testvorrichtung 60 in Schritt c) eine Testkenngröße KT erzeugt, die durch den Testkenngrößenaustritt 66 austritt, wobei die Testkenngröße KT in der als Brandmelder ausgebildeten Brandschutzkomponente 1 ein Brandmeldersignal S_{B} und/oder ein Lichtsignal einer optische Anzeigevorrichtung 17 am Brandmelder 16 erzeugt. Vorzugsweise wird das Brandmeldersignal S_{B} hierbei an das unbemannte Fahrzeug 2 und/oder an eine Zentrale 12, vorzugsweise eine Brandmelder- und/oder Löschsteuerzentrale versendet und dieses Brandmeldersignal S_{B} wird vorzugsweise als Testquittierungssignal S_{T} erfasst. Auch hier wird wiederum auf die vorangegangenen Erläuterungen, bevorzugten Merkmale, Effekte und/oder Vorteile, wie sie zuvor für das unbemannte Fahrzeug 2 erörtert worden sind und für das Brandschutzsystem nachfolgend erörtert werden, in analoger Weise Bezug genommen.

Eine weitere vorteilhafte Ausgestaltung des Verfahrens ist in Fig. 8c gezeigt. Dabei zeichnet sich das Verfahren dadurch aus, dass die Überprüfungsvorrichtung 20 eine Bilderfassungsvorrichtung 15 aufweist, die zur Erfassung eines Bildes und zur Erzeugung von Bilddaten S_{pic}, die das erfasste Bild repräsentieren, ausgebildet ist, wobei Schritt c) die Teilschritte c1), c2 und c3) aufweist, nämlich:
c1) Erfassen eines Bildes der Brandschutzkomponente 1;
c2) Erzeugung von Bilddaten S_{pic}, die das erfasste Bild repräsentieren; und
c3) Ermitteln einer Funktionsfähigkeit der Brandschutzkomponente 1.

Auch hier wird wiederum auf die vorangegangenen Erläuterungen, bevorzugten Merkmale, Effekte und/oder Vorteile, wie sie zuvor für das unbemannte Fahrzeug 2 erörtert worden sind und für das Brandschutzsystem nachfolgend erörtert werden, in analoger Weise Bezug genommen.

Gemäß dem dritten Aspekt der Erfindung ist ein Brandschutzsystem vorgesehen, wobei dieses Brandschutzsystem in Fig. 1 schematisch dargestellt ist. Es umfasst eine Brandschutzanlage 11 mit mindestens einer Brandschutzkomponente 1, im dargestellten Beispiel mit vier Brandschutzkomponenten, zwei als Brandmelder 16 und zwei als Löschanlagenkomponente 14 ausgebildet. Das unbemannte Fahrzeug 2 ist entsprechend dem zweiten Aspekt der Erfindung ausgebildet vorzugsweise mit dem verschieden beschrieben Ausgestaltungen. Weiterhin weist das erfindungsgemäße Brandschutzsystem eine weitere Vorrichtung auf, insbesondere eine Zentrale 12, beispielsweise eine Brandmelder- und/oder Löschsteuerzentrale oder eine Fernsteuerungsvorrichtung 30 (siehe Fig. 3b).

Das unbemannte Fahrzeug 2 ist ausgebildet und/oder konfiguriert, um ein Verfahren zur Überprüfung der mindestens einen Brandschutzkomponente 1 der Brandschutzanlage 11 nach dem ersten Aspekt der Erfindung und vorzugsweise nach deren beschriebenen Ausgestaltungen durchzuführen.

In Fig. 3a ist ein Teil des Brandschutzsystems detaillierter dargestellt. Die Brandschutzkomponente 1 ist als Brandmelder 16 ausgebildet und das unbemannte Fahrzeug 2 weist eine Überprüfungsvorrichtung 20 mit einer Testvorrichtung 60 und/oder vorzugsweise mit einer Bilderfassungsvorrichtung 15 auf. Die Testvorrichtung 60 ist zum Erzeugen einer Testkenngröße KT ausgebildet und/oder konfiguriert. Der Brandmelder 16 ist ferner ausgebildet und/oder konfiguriert, nach einer Detektion der Testkenngröße KT, vorzugsweise nach Testauslösung, ein Brandmeldersignal S_{B} und/oder ein Lichtsignal einer optischen Anzeigevorrichtung 17 des Brandmelders 16 zu erzeugen, wobei vorzugsweis das Brandmeldersignal S_{B} an die Zentrale 12, vorzugsweise an eine Brandmelder- und/oder Löschsteuerzentrale gesendet wird. Die Zentrale 12 ist ausgebildet und/oder konfiguriert dieses Brandmeldersignal S_{B} als Testquittierungssignal S_{T} zu erfassen. Ferner ist die Zentrale 12 ausgebildet und/oder konfiguriert, vor Überprüfung der mindestens einen Brandschutzkomponente 1 in einen Testmodus versetzt zu werden. Vorzugsweise erfasst die Bilderfassungsvorrichtung 15 das Lichtsignal der optischen Anzeigevorrichtung 17 am Brandmelder 16. Dies wird als erfolgreiche Durchführung der Überprüfung, insbesondere der Testauslösung im unbemannten Fahrzeug abgespeichert.

### Bezugszeichenliste

| | |
|---|---|
| 1 | Brandschutzkomponente |
| 2 | Unbemannte Fahrzeug, z.B. Fluggeräte, Drohne, Robot Crawler |
| 3 | Navigationssteuereinheit |
| 4 | Rechnereinheit |
| 5 | Speicher |
| 6 | Erste Signalsende- und/oder Empfangseinheit |
| 6a | Weitere Signalsende- und/oder Empfanqseinheit |
| 7 | Zweite Signalsende- und/oder Empfangseinheit |
| 8 | Dritte Signalsende- und/oder Empfangseinheit |
| 9 | Funkidentifikationsmittel, z.B. NFC oder RFID Tag |
| 10 | Identifikationsdaten |
| 11 | Brandschutzanlage |
| 12 | Zentrale, z.B. Brandmelder- und/oder Löschsteuerzentrale |
| 14 | Löschanlagenkomponente |
| 15 | Bilderfassungsvorrichtung |
| 16 | Brandmelder |
| 17 | optische Anzeigevorrichtung |
| 20 | Überprüfungsvorrichtung |
| 21 | Drehflügel |
| 23 | Grundkörper |
| 24 | Ausleger zum Antriebsmotor |
| 25 | Antriebsmotor |
| 26 | Landegestell |
| 29 | Projektionsfläche |
| 30 | Fernsteuerungsvorrichtung |
| 40 | Löschmittelversorgungsvorrichtung |
| 41 | Rohrleitungen |
| 46 | Rad |
| 47 | Gelenkarme |
| 50 | Schutzbereich |
| 51 | Decke |
| 60 | Testvorrichtung |
| 61 | Aerosolerzeuger |
| 62 | Gaserzeuger |
| 63 | Strahlungsquelle |
| 64 | Wärmeerzeuger |
| 65 | Schaltsignalerzeuger |
| 66 | Testkenngrößenaustritt |
| 67 | Gelenkeinheit |
| 68 | Ausrichtungsvorrichtung |
| 69 | Längenverstellbare Vorrichtung |
| 70 | Zentralen-Sende- und/oder Empfangsvorrichtung |
| 80 | Brandkenngrößeneintrittsöffnung |
| 81 | Abschirmungsvorrichtung |
| 82 | definiertes TestkenngrößenausbreitunqsvoIumen |
| 83 | Erstes Abschirmelement |
| 84 | Zweites Abschirmelement |
| 85 | Dichtrand |
| S_{A} | Aktivierungssignal |
| S_{B} | Brandmeldersignal |
| S_{T} | Testquittierungssignal |
| S_{I} | Identifikationssignal |
| S_{pic} | Bilddaten |
| KT | Testkenngröße |
| KT₁ | Testkenngröße Aerosolstrom, z.B. Prüfaerosol |
| KT₂ | Testkenngröße Testgas, z.B. CO oder CO₂ |
| KT₃ | Testkenngröße elektromagnetische Strahlung |
| KT₄ | Testkenngröße Wärmestrahlung |
| (xᵢ, yᵢ, zᵢ) | zugeordnete Überprüfungsposition |

## Patentansprüche

1. Verfahren zur Überprüfung einer Brandschutzkomponente (1) einer Brandschutzanlage (11), wobei die Brandschutzanlage (11) mehrere Brandschutzkomponenten (1) aufweist, für die jeweils eine Überprüfung vorgesehen ist, wobei das Verfahren die folgenden Schritte aufweist:
a) Bereitstellen eines unbemannten Fahrzeuges (2) mit einer ersten Signalsende- und/oder Empfangseinheit (6), die zum Empfang eines Identifikationssignals ausgebildet ist, das Identifikationsdaten (10) zur Charakterisierung und/oder Identifikation von jeder der mehreren Brandschutzkomponenten (1) repräsentiert, wobei
die Identifikationsdaten (10) zumindest eine der jeweiligen Brandschutzkomponente (1) der mehreren Brandschutzkomponenten (1) zugeordnete Überprüfungsposition (xᵢ, yᵢ, zᵢ) repräsentieren,
die Identifikationsdaten (10) einen Typ der jeweiligen Brandschutzkomponente (1) der mehreren Brandschutzkomponenten (1) repräsentieren; und wobei das unbemannte Fahrzeug (2) mit einer Übermittlung der Identifikationsdaten (10) relevante Informationen zur Auswahl erhält, welche Art der Überprüfung an der jeweiligen Brandschutzkomponente (1) der mehreren Brandschutzkomponenten (1) durchgeführt werden muss;
b) Navigieren des unbemannten Fahrzeuges (2) mittels einer Navigationssteuereinheit (3) des unbemannten Fahrzeuges (2) basierend auf den entsprechenden Identifikationsdaten durch Zuordnen einer entsprechenden Überprüfungsposition (X i, yi, zi) zu jeder der mehreren Brandschutzkomponenten (1) basierend auf den Identifikationsdaten zu einer Brandschutzkomponente
(1) der mehreren Brandschutzkomponenten (1), an welcher eine Überprüfung durchgeführt werden soll, wobei das unbemannte Fahrzeug (2) derart zu der einen Brandschutzkomponente (1) navigiert wird, so dass das unbemannte Fahrzeug (2) in der der Brandschutzkomponente (1) zugeordneten Überprüfungsposition (xᵢ, yᵢ, zᵢ) angeordnet ist; und
c) Durchführung der Überprüfung an der Brandschutzkomponente (1) mittels einer Überprüfungsvorrichtung (20) des unbemannten Fahrzeuges (2) entsprechend der zu durchführenden Art der Überprüfung an der jeweiligen Brandschutzkomponente.

2. Verfahren nach Anspruch 1, **dadurch gekennzeichnet, dass** die Schritte b) bis c) nacheinander für jede der Brandschutzkomponenten als die jeweilige Brandschutzkomponente, für die eine Überprüfung ausgeführt werden soll, ausgeführt werden.

3. Verfahren nach einem der vorhergehenden Ansprüche, **gekennzeichnet durch** den zwischen Schritt a) und Schritt b) auszuführenden Schritt a1), nämlich einem Empfang eines Navigationssteuersignals, beispielsweise von einer Fernsteuerungsvorrichtung (30), mittels der ersten Signalsende- und/oder Empfangseinheit (6) des unbemannten Fahrzeuges (2), wobei das Navigieren des Fahrzeuges (2) in Schritt b) basierend auf dem Navigationssteuersignal erfolgt.

4. Verfahren nach einem der vorhergehenden Ansprüche 1 oder 2, wobei das Navigieren in Schritt b) selbständig mittels der Navigationssteuereinheit (3) erfolgt, und/oder wobei das Navigieren in Schritt b) durch eine Kombination aus dem Navigieren des unbemannten Fahrzeuges (2) basierend auf dem Navigationssteuersignal und dem selbständigen Navigieren mittels der Navigationssteuereinheit (3) erfolgt.

5. Verfahren nach einem der vorhergehenden Ansprüche, **dadurch gekennzeichnet, dass** die Überprüfungsvorrichtung (20) eine Testvorrichtung (60) zum Erzeugen einer Testkenngröße (KT) aufweist, wobei die Testvorrichtung einen Testkenngrößenaustritt (66) für einen Austritt der Testkenngröße (KT) aufweist; die Testvorrichtung (60) in Schritt c) eine Testkenngröße (KT) erzeugt, die durch den Testkenngrößenaustritt (66) austritt;
die Testkenngröße (KT) in derals Brandmelder (16) ausgebildeten Brandschutzkomponente (1) ein Brandmeldersignal (S_{B}) und/oder ein Lichtsignal einer optischen Anzeigevorrichtung (17) am Brandmelder (16) erzeugt, und
wobei vorzugsweise das Brandmeldersignal S_{B} an das unbemannte Fahrzeug (2)
und/oder an eine Zentrale (12), vorzugsweise eine Brandmelder- und/oder Löschsteuerzentrale, und/oder an die Fernsteuerungsvorrichtung (30) versendet wird und dieses Brandmeldersignal (S_{B}) vorzugsweise als Testquittierungssignal (S_{T}) erfasst wird.

6. Verfahren nach einem der vorhergehenden Ansprüche, wobei die Überprüfungsvorrichtung (20) eine Bilderfassungsvorrichtung (15) aufweist, die zur Erfassung eines Bildes und zur Erzeugung von Bilddaten (S_{pic}), die das erfasste Bild repräsentieren, ausgebildet ist, wobei Schritt c) die folgenden Teilschritte aufweist:
- Erfassen eines Bildes der Brandschutzkomponente (1);
- Erzeugung von Bilddaten (S_{pic}), die das erfasste Bild repräsentieren; und
- Ermitteln einer Funktionsfähigkeit der Brandschutzkomponente (1).

7. Unbemanntes Fahrzeug (2) zur Überprüfung einer Brandschutzkomponente (1) einer Brandschutzanlage (11), wobei die Brandschutzanlage (11) mehrere Brandschutzkomponenten (1) aufweist, für die jeweils eine Überprüfung vorgesehen ist, wobei jeder der mehreren Brandschutzkomponenten (1) jeweils eine entsprechende Überprüfungsposition (xᵢ, yᵢ, zᵢ) zugeordnet ist; wobei das unbemannte Fahrzeug (2) aufweist:
- eine Überprüfungsvorrichtung (20) zur Durchführung der Überprüfung der Brandschutzkomponente (1),
- eine erste Signalsende- und/oder Empfangseinheit (6), die zum Empfang eines Identifikationssignals ausgebildet ist, das Identifikationsdaten (10) zur Charakterisierung und/oder Identifikation von jeder der mehreren Brandschutzkomponenten (1) repräsentiert, wobei
die Identifikationsdaten (10) zumindest eine der jeweiligen Brandschutzkomponente (1) der mehreren Brandschutzkomponenten (1) zugeordnete Überprüfungsposition (xᵢ, yᵢ, zᵢ) repräsentieren,
die Identifikationsdaten (10) einen Typ der jeweiligen Brandschutzkomponente (1) der mehreren Brandschutzkomponenten (1) repräsentieren; und wobei das unbemannte Fahrzeug (2) mit einer Übermittlung der Identifikationsdaten (10) relevante Informationen zur Auswahl erhält, welche Art der Überprüfung an der jeweiligen Brandschutzkomponente (1) der mehreren Brandschutzkomponenten (1) durchgeführt werden muss;
wobei das unbemannte Fahrzeug (2) zum Ausführen der Überprüfung der jeweiligen Brandschutzkomponente (1) basierend auf den entsprechenden Identifikationsdaten (10) konfiguriert ist, wobei das unbemannte Fahrzeug (2) eingerichtet ist, die der jeweiligen Brandschutzkomponente (1) zugeordnete Überprüfungsposition (xᵢ, yᵢ, zᵢ) der jeweiligen Brandschutzkomponente basierend auf den Identifikationsdaten zuzuordnen; und
- eine Navigationssteuereinheit (3), die zum Navigieren des unbemannten Fahrzeuges (2) zu der jeweiligen Brandschutzkomponente (1) ausgebildet und/oder konfiguriert ist, an welcher die Überprüfung durchgeführt werden soll, wobei die Navigationssteuereinheit ferner konfiguriert ist, das unbemannte Fahrzeug (2) derart zu der jeweiligen Brandschutzkomponente (1) zu navigieren, dass das unbemannte Fahrzeug (2) in der der jeweiligen Brandschutzkomponente (1) zugeordneten Überprüfungsposition (xᵢ, yᵢ, zᵢ) angeordnet ist,
wobei das unbemannte Fahrzeug (2) dazu ausgebildet und/oder konfiguriert ist, die Überprüfung entsprechend der zu durchführenden Art der Überprüfung an der jeweiligen Brandschutzkomponente (1) nach Erreichen der Brandschutzkomponente (1) und Anordnen des unbemannten Fahrzeugs (2) in der der jeweiligen Brandschutzkomponente (1) zugeordneten Überprüfungsposition (xᵢ, yᵢ, zᵢ) mittels der Überprüfungsvorrichtung (20) auszuführen.

8. Unbemanntes Fahrzeug (2) nach dem vorhergehenden Anspruch 7, **dadurch gekennzeichnet, dass** die erste Signalsende- und/oder Empfangseinheit (6) oder eine weitere Signalsende- und/oder Empfangseinheit (6a) ausgebildet und/oder konfiguriert sind, das Identifikationssignal von einem Funkidentifikationsmittel (9), insbesondere einem NFC-Tag oder einem RFID-Tag der Brandschutzkomponente (1) zu empfangen.

9. Unbemanntes Fahrzeug (2) nach einem der vorhergehenden Ansprüche 7 bis 8, **dadurch gekennzeichnet, dass**
das unbemannte Fahrzeug (2) dazu ausgebildet und/oder konfiguriert ist, ein Aktivierungssignal (S_{A}) zu generieren, insbesondere wenn das unbemannte Fahrzeug (2) die jeweilige Brandschutzkomponente (1) und/oder die zugeordnete Überprüfungsposition (xᵢ, yᵢ, zᵢ) erreicht; und
das unbemannte Fahrzeug (2) dazu ausgebildet und/oder konfiguriert ist, die Überprüfung der jeweiligen Brandschutzkomponente zu aktivieren, wenn und/oder sobald das Aktivierungssignal (S_{A}) generiert ist.

10. Unbemanntes Fahrzeug (2) nach einem der vorhergehenden Ansprüche 7 bis 9, **dadurch gekennzeichnet, dass**
die Überprüfungsvorrichtung (20) eine Bilderfassungsvorrichtung (15) aufweist, die zur Erfassung eines Bildes und zur Erzeugung korrespondierender Bilddaten (S_{pic}) einer zuvor erreichten Brandschutzkomponente (1) ausgebildet und/oder konfiguriert ist; und vorzugsweise die Überprüfungsvorrichtung (20) zur Ermittlung einer Funktionsfähigkeit der Brandschutzkomponente (1) basierend auf den Bilddaten (S_{pic}) ausgebildet und/oder konfiguriert ist.

11. Unbemanntes Fahrzeug (2) nach einem der vorhergehenden Ansprüche 7 bis 10, **dadurch gekennzeichnet, dass**
die Überprüfungsvorrichtung (20) eine Testvorrichtung (60) zum Erzeugen einer Testkenngröße (KT) aufweist;
die Testvorrichtung (60) einen Testkenngrößenaustritt (66) für einen Austritt der Testkenngröße (KT) aufweist;
die Testvorrichtung (60) beispielsweise einen Aerosolerzeuger (61), einen Gaserzeuger (62), eine Strahlungsquelle (63), einen Wärmeerzeuger (64) und/oder einen Schaltsignalerzeuger (65) umfasst; und
die Testvorrichtung (60) zum Durchführen der Überprüfung dazu konfiguriert und/oder ausgebildet ist, eine Testkenngröße (KT) zu erzeugen, die vorzugsweise durch den Testkenngrößenaustritt (66) ausbringbar ist.

12. Unbemanntes Fahrzeug (2) nach Anspruch 11, **dadurch gekennzeichnet, dass** die Testvorrichtung (60) eine dreh-, schwenk- und/oder längenverstellbare Ausrichtungsvorrichtung (68) aufweist, an der der Testkenngrößenaustritt (66) angeordnet ist, wobei das unbemannte Fahrzeug (2), insbesondere die Testvorrichtung (60), zur Steuerung der Ausrichtungsvorrichtung (68) ausgebildet und/oder konfiguriert ist, um den Testkenngrößenaustritt (66), insbesondere zu oder relativ zu der jeweiligen Brandschutzkomponente (1), auszurichten und wobei ferner vorzugsweise der Testkenngrößenaustritt (66) an einem von dem Fahrzeug (2) abgewandten Endabschnitt der Ausrichtungsvorrichtung (68) angeordnet ist.

13. Unbemanntes Fahrzeug (2) nach einem der Ansprüche 11 bis 12, **dadurch gekennzeichnet, dass** das unbemannte Fahrzeug (2) eine Abschirmungsvorrichtung (81) aufweist, wobei die Abschirmungsvorrichtung (81) dazu ausgebildet ist, um die Brandschutzkomponente (1) herum ein definiertes Testkenngrößenausbreitungsvolumen (82) auszubilden.

14. Unbemanntes Fahrzeug (2) nach Anspruch 13, wobei bei Ausbildung des unbemannten Fahrzeuges (2) als Drohne, welche Drehflügel (21) aufweist, die Abschirmungsvorrichtung (81) eine Projektionsfläche (29) senkrecht zu den Drehachsen der Drehflügel (21) aufweist, welche, betrachtet in Richtung der Drehachsen der Drehflügel (21), die von den Drehflügeln (21) überstrichene Fläche zumindest teilweise überlappt, und/oder
wobei die Abschirmungsvorrichtung (81) ein erstes Abschirmelement (83) und ein zweites Abschirmelement (84) aufweist, wobei das erste Abschirmelement (83) dazu ausgebildet ist, das definierte Testkenngrößenausbreitungsvolumen (82) auszubilden,
und das zweite Abschirmelement (83) die Projektionsfläche (29) senkrecht zu den Drehachsen der Drehflügel (21) aufweist, welche, betrachtet in Richtung der Drehachsen der Drehflügel (21), die von den Drehflügeln (21) überstrichene Fläche zumindest teilweise überlappt.

15. Brandschutzsystem, aufweisend:
- eine Brandschutzanlage (11) mit mehreren Brandschutzkomponenten (1);
- ein unbemanntes Fahrzeug (2) nach einem der vorhergehenden Ansprüche 7 bis 14; und
- eine weitere Vorrichtung, insbesondere eine Zentrale (12) und/oder eine Fernsteuerungsvorrichtung (30);
wobei das unbemannte Fahrzeug (2) ausgebildet und/oder konfiguriert ist, ein Verfahren zur Überprüfung der mindestens einen Brandschutzkomponente (1) der Brandschutzanlage (11) nach einem der Ansprüche 1 bis 6 durchzuführen.

## Claims

1. A method for testing a fire protection component (1) of a fire protection structure (11), wherein the fire protection structure (11) has a plurality of fire protection components (1), for each of which a test is provided, wherein the method has the following steps:
a) providing an unmanned vehicle (2) with a first signal transmitting and/or receiving unit (6), which is embodied for receiving of an identification signal, which represents identification data (10) for characterizing and/or identifying each of the plurality of fire protection components (1); wherein
the identification data (10) represents at least one assigned test position (xᵢ, _{y}i, zᵢ) of the respective one fire protection component (1) of the plurality of fire protection components (1),
the identification data (10) represents a type of the respective fire protection component (1) of the plurality of fire protection components (1); and wherein and the unmanned vehicle (2) upon transmission of the identification data (10) receives information relevant for selecting the type of test to be performed at the respective fire protection component (1) of the plurality of fire protection components (1);
b) navigating the unmanned vehicle (2) by means of a navigation control unit (3) of the unmanned vehicle (2) based on the corresponding identification data, by associating a corresponding test position (xᵢ, yᵢ, zᵢ) to each of the plurality of fire protection components (1) based on the identification data, to a fire protection component (1) of the plurality of fire protection components (1), at which a test is to be performed, wherein the unmanned vehicle (2) is navigated to the fire protection component (1) in such a way that the unmanned vehicle (2) is arranged in the test position (xᵢ, yᵢ, zᵢ), which is assigned to the fire protection component (1); and
c) performing the test on the fire protection component (1) by means of a testing device (20) of the unmanned vehicle (2) according to the type of test to be performed at the respective fire protection component.

2. The method according to claim 1, **characterized in that** wherein steps b) and c) are performed one after the other for each of the fire protection components as the respective fire protection component, for which a test is to be performed.

3. The method according to one of the preceding claims, **characterized by** step a1), which is to be performed between step a) and step b), namely a receiving of a navigation control signal, for example by a remote control device (30), by means of the first signal transmitting and/or receiving unit (6) of the unmanned vehicle (2), wherein the navigation of the vehicle (2) in step b) takes place on the basis of this navigation control signal.

4. The method according to one of the preceding claims 1 or 2, wherein the navigation
in step b) takes place independently by means of the navigation control unit (3) and/or the navigation in step b) takes place by means of a combination of the navigating of the unmanned vehicle (2) on the basis of the navigation control signal and the independent navigation by means of the navigation control unit (3).

5. The method according to one of the preceding claims, **characterized in that** the testing device (20) has a checking device (60) for generating a test parameter (KT), wherein the checking device has a test parameter exit (66) for an exit of the test parameter (KT);
the checking device (60) generates a test parameter (KT) in step c), which exits through the test parameter exit (66);
the test parameter (KT) generates a fire detector signal (S_{B}) and/or a light signal of an optical display device (17) on the fire detector (16) in the fire protection component (1), which is embodied as fire detector (16), and
wherein the fire detector signal S_{B} is preferably sent to the unmanned vehicle (2) and/or to a control center (12), preferably a fire detector and/or extinguishing control center, and/or to the remote control device (30) and this fire detector signal (S_{B}) is preferably captured as test acknowledgement signal (S_{T}).

6. The method according to one of the preceding claims, wherein the testing device (20) has an image capturing device (15), which is embodied for capturing an image and for generating image data (S_{pic}), which represents the captured image, wherein step c) has the following partial steps:
- capturing an image of the fire protection component (1);
- generating image data (S_{pic}), which represents the captured image; and
- determining a functionality of the fire protection component (1).

7. An unmanned vehicle (2) for testing a fire protection component (1) of a fire protection structure (11), wherein the fire protection structure (11) has a plurality of fire protection components (1), for each of which a test is provided, wherein each of the plurality of fire protection components (1) has a corresponding assigned test position (xᵢ, yᵢ, zᵢ); the unmanned vehicle (2) having:
- a testing device (20) for performing the test of the fire protection component (1), and
- a first signal transmitting and/or receiving unit (6), which is embodied for receiving of an identification signal, which represents identification data (10) for characterizing and/or identifying each of the plurality of fire protection components (1); wherein
the identification data (10) represents an assigned test position (xᵢ, yᵢ, zᵢ) of the at least one fireection component (1) of the plurality of fire protection components (1),
the identification data (10) represents a type of the respective fire protection component (1) of the plurality of fire protection components (1); and wherein and the unmanned vehicle (2) upon transmission of the identification data (10) receives information relevant for selecting the type of test to be performed at the respective fire protection component (1) of the plurality of fire protection components (1);
wherein the unmanned vehicle (2) is configured to perform the test of the respective fire protection component (1) based on the corresponding identification data (10), wherein the unmanned vehicle (2) is configured to assign a test position (xᵢ, yᵢ, zᵢ), which is assigned with the respective fire protection components (1), with the respective fire protection component (1) based on the identification data; and
- a navigation control unit (3), which is embodied and/or configured for navigating the unmanned vehicle (2) to the fire protection component (1) at which a test is to be performed, wherein the unmanned vehicle (2) is navigated to the fire protection component (1) in such a way that the unmanned vehicle (2) is arranged in the test position (xᵢ, yᵢ, zᵢ), which is assigned to the fire protection component (1),
wherein the vehicle (2) is embodied and/or configured for performing the test in accordance with the type of test to be performed of the fire protection component (1) after reaching the fire protection component (1) and arranging the unmanned vehicle (2) in the test position (xᵢ, yᵢ, zᵢ) respectively associated with the respective fire protection component (1) by means of the testing device (20).

8. The unmanned vehicle (2) according to the preceding claim 7, **characterized in that** the first signal transmitting and/or receiving unit (6) or a further signal transmitting and/or receiving unit (6a) are embodied and/or configured for receiving the identification signal from a radio identification means (9), in particular an NFC tag or an RFID tag, of the fire protection component (1).

9. The unmanned vehicle (2) according to one of the preceding claims 7 to 8, **characterized in that**
the unmanned vehicle (2) is embodied and/or configured for generating an activation signal (S_{A}), in particular when the unmanned vehicle (2) reaches the respective fire protection component (1) and/or the assigned test position (xᵢ, yᵢ, zᵢ); and
the unmanned vehicle (2) is embodied and/or configured for activating the test of the respective fire protection component, when and/or as soon as the activation signal (S_{A}) is generated.

10. The unmanned vehicle (2) according to one of the preceding claims 7 to 9, **characterized in that**
the testing device (20) has an image capturing device (15), which is embodied and/or configured for capturing an image and for generating corresponding image data (S_{pic}) of a fire protection component (1), which had been reached before; and the testing device (20) is preferably embodied and/or configured for determining a functionality of the fire protection component (1) on the basis of the image data (S_{pic}).

11. The unmanned vehicle (2) according to one of the preceding claims 7 to 10, **characterized in that**
the testing device (20) has a checking device (60) for generating a test parameter (KT);
the checking device (60) has a test parameter exit (66) for an exit of the test parameter (KT);
the checking device (60) comprises for example an aerosol generator (61), a gas generator (62), a source of radiation (63), a heat generator (64) and/or a switch signal generator (65); and
for performing the test, the checking device (60) is configured and/or embodied for generating a test parameter (KT), which can preferably be output through the test parameter exit (66).

12. The unmanned vehicle (2) according to claim 11, **characterized in that** the checking device (60) has a rotatable, pivotable and/or length-adjustable aligning device (68), on which the test parameter exit (66) is arranged, and wherein the unmanned vehicle (2), in particular the checking device (60), is embodied and/or configured for controlling the aligning device (68), in order to align the test parameter exit (66), in particular to or relative to the respective fire protection component (1), and wherein the test parameter exit (66) is preferably arranged on an end section of the aligning device (68) facing away from the vehicle (2).

13. The unmanned vehicle (2) according to one of claims 11 to 12, **characterized in that** the unmanned vehicle (2) has a shielding device (81), wherein the shielding device (81) is embodied for embodying a defined test parameter propagation volume (82) around the fire protection component (1).

14. The unmanned vehicle (2) according to claim 13, wherein in the case of the embodiment of the unmanned vehicle (2) as drone, which has rotary wings (21), the shielding device (81) has a projection surface (29) perpendicular to the axes of rotation of the rotary wings (21), which at least partially overlaps the surface passed over by the rotary wings (21), viewed in the direction of the axes of rotation of the rotary wings (21), and/or
wherein the shielding device (81) has a first shielding element (83) and a second shielding element (84), wherein the first shielding element (83) is embodied for embodying the defined test parameter propagation volume (82), and the second shielding element (83) has the projection surface (29) perpendicular to the axes of rotation of the rotary wings (21), which at least partially overlaps the surface passed over by the rotary wings (21), viewed in the direction of the axes of rotation of the rotary wings (21).

15. A fire protection system having:
- a fire protection structure (11) comprising a plurality of fire protection components (1);
- an unmanned vehicle (2) according to one of the preceding claims 7 to 14; and
- a further device, in particular a control center (12) and/or a remote control device (30);
wherein the unmanned vehicle (2) is embodied and/or configured for carrying out a method for testing the at least one fire protection component (1) of the fire protection structure (11) according to one of claims 1 to 6.

## Revendications

1. Procédé pour la vérification d'un élément de protection contre l'incendie (1) d'une installation de protection contre l'incendie (11), dans lequel l'installation de protection contre l'incendie (11) comprend plusieurs éléments de protection contre l'incendie (1) pour chacun desquels est prévue une vérification, dans lequel le procédé comprend les étapes suivantes :
a) la mise à disposition d'un véhicule sans conducteur (2) ayant une première unité d'émission et/ou de réception de signaux (6), qui est conçue pour la réception d'un signal d'identification qui représente des données d'identification (10) pour la caractérisation et/ou l'identification de chacun des plusieurs éléments de protection contre l'incendie (1), dans lequel
les données d'identification (10) représentent au moins une position de vérification (xᵢ, yᵢ, zᵢ) associée à l'élément de protection contre l'incendie (1) concerné des plusieurs éléments de protection contre l'incendie (1),
les données d'identification (10) représentent un type de l'élément de protection contre l'incendie (1) concerné des plusieurs éléments de protection contre l'incendie (1) ; et dans lequel le véhicule sans conducteur (2) obtient, avec une transmission des données d'identification (10), des informations pertinentes pour sélectionner quelle sorte de vérification doit être exécutée au niveau de l'élément de protection contre l'incendie (1) concerné des plusieurs éléments de protection contre l'incendie (1) ;
b) le guidage du véhicule sans conducteur (2) au moyen d'une unité de commande de guidage (3) du véhicule sans conducteur (2) sur la base des données d'identification correspondantes par l'association d'une position de vérification (xᵢ, yᵢ, zᵢ) correspondante à chacun des plusieurs éléments de protection contre l'incendie (1) sur la base des données d'identification vers un élément de protection contre l'incendie (1) des plusieurs éléments de protection contre l'incendie (1) au niveau duquel une vérification doit être exécutée, dans lequel le véhicule sans conducteur (2) est guidé vers l'élément de protection contre l'incendie (1) de telle manière que le véhicule sans conducteur (2) est placé à la position de vérification (xᵢ, yᵢ, zᵢ) associée à l'élément de protection contre l'incendie (1) ; et
c) l'exécution de la vérification au niveau de l'élément de protection contre l'incendie (1) au moyen d'un dispositif de vérification (20) du véhicule sans conducteur (2) conformément à la sorte de vérification à exécuter au niveau de l'élément de protection contre l'incendie concerné.

2. Procédé selon la revendication 1, **caractérisé en ce que** les étapes b) à c) sont effectuées l'une après l'autre pour chacun des éléments de protection contre l'incendie en tant qu'élément de protection contre l'incendie concerné pour lequel une vérification doit être effectuée.

3. Procédé selon l'une quelconque des revendications précédentes, **caractérisé par** l'étape a1) à effectuer entre l'étape a) et l'étape b), à savoir la réception d'un signal de commande de guidage, par exemple d'un dispositif de commande à distance (30), au moyen de la première unité d'émission et/ou de réception de signaux (6) du véhicule sans conducteur (2), dans lequel le guidage du véhicule (2) a lieu dans l'étape b) sur la base du signal de commande de guidage.

4. Procédé selon l'une quelconque des revendications précédentes 1 ou 2, dans lequel le guidage à l'étape b) a lieu de manière automatique au moyen de l'unité de commande de guidage (3),
et/ou dans lequel le guidage à l'étape b a lieu par une combinaison entre le guidage du véhicule sans conducteur (2) sur la base du signal de commande de guidage et le guidage automatique au moyen de l'unité de commande de guidage (3).

5. Procédé selon l'une quelconque des revendications précédentes, **caractérisé en ce que** le dispositif de vérification (20) comprend un dispositif de test (60) pour la génération d'une grandeur caractéristique de test (KT), dans lequel le dispositif de test comprend une sortie de grandeur caractéristique de test (66) pour une sortie de la grandeur caractéristique de test (KT) ;
le dispositif de test (60) à l'étape c) génère une grandeur caractéristique de test (KT) qui sort par la sortie de grandeur caractéristique de test (66) ;
la grandeur caractéristique de test (KT) génère, dans l'élément de protection contre l'incendie (1) conçu en tant que détecteur d'incendie (16), un signal de détecteur d'incendie (S_{B}) et/ou un signal lumineux d'un dispositif d'affichage optique (17) au niveau du détecteur d'incendie (16), et
dans lequel de préférence le signal de détecteur d'incendie (S_{B}) est envoyé au véhicule sans conducteur (2) et/ou à une centrale (12), de préférence à une centrale de détecteur d'incendie et/ou de commande d'extinction, et/ou au dispositif de commande à distance (30), et ce signal de détecteur d'incendie (S_{B}) est acquis de préférence en tant que signal d'acquittement de test (S_{T}).

6. Procédé selon l'une quelconque des revendications précédentes, dans lequel le dispositif de vérification (20) comprend un dispositif d'acquisition d'images (15) qui est conçu pour l'acquisition d'une image et pour la génération de données d'image (S_{pic}) qui représentent l'image acquise, dans lequel l'étape c) comprend les sous-étapes suivantes :
- l'acquisition d'une image de l'élément de protection contre l'incendie (1) ;
- la génération de données d'image (S_{pic}) qui représentent l'image acquise ; et
- la détermination d'une fonctionnalité de l'élément de protection contre l'incendie (1).

7. Véhicule sans conducteur (2) pour la vérification d'un élément de protection contre l'incendie (1) d'une installation de protection contre l'incendie (11), dans lequel l'installation de protection contre l'incendie (11) comprend plusieurs éléments de protection contre l'incendie (1) pour chacun desquels est prévue une vérification, dans lequel chacun des plusieurs éléments de protection contre l'incendie (1) est associé respectivement à une position de vérification (xᵢ, yᵢ, zᵢ) correspondante ; dans lequel le véhicule sans conducteur (2) comprend :
- un dispositif de vérification (20) pour l'exécution de la vérification de l'élément de protection contre l'incendie (1),
- une première unité d'émission et/ou de réception de signaux (6) qui est conçue pour l'émission d'un signal d'identification qui représente des données d'identification (10) pour la caractérisation et/ou l'identification de chacun des plusieurs éléments de protection contre l'incendie (1), dans lequel les données d'identification (10) représentent au moins une position de vérification (xᵢ, yᵢ, zᵢ) associée à l'élément de protection contre l'incendie (1) concerné des plusieurs éléments de protection contre l'incendie (1),
les données d'identification (10) représentent un type de l'élément de protection contre l'incendie (1) concerné des plusieurs éléments de protection contre l'incendie (1) ; et dans lequel le véhicule sans conducteur (2) obtient avec une transmission des données d'identification (10) des informations pertinentes pour sélectionner quelle sorte de vérification doit être exécutée au niveau de l'élément de protection contre l'incendie (1) concerné des plusieurs éléments de protection contre l'incendie (1) ;
dans lequel le véhicule sans conducteur (2) est configuré pour effectuer la vérification de l'élément de protection contre l'incendie (1) concerné sur la base des données d'identification (10) correspondantes, dans lequel le véhicule sans conducteur (2) est agencé pour associer la position de vérification (xᵢ, yᵢ, zᵢ), associée à l'élément de protection contre l'incendie (1) concerné, à l'élément de protection contre l'incendie concerné sur la base des données d'identification ; et
- une unité de commande de guidage (3) qui est conçue et/ou configurée pour le guidage du véhicule sans conducteur (2) vers l'élément de protection contre l'incendie (1) concerné au niveau duquel la vérification doit être exécutée, dans lequel l'unité de commande de guidage est en plus configurée pour guider le véhicule sans conducteur (2) vers l'élément de protection contre l'incendie (1) concerné de telle manière que le véhicule sans conducteur (2) est placé à la position de vérification (xᵢ, yᵢ, zᵢ) associée à l'élément de protection contre l'incendie (1) concerné,
dans lequel le véhicule sans conducteur (2) est conçu et/ou configuré pour effectuer, au moyen du dispositif de vérification (20), la vérification conformément à la sorte de vérification à exécuter au niveau de l'élément de protection contre l'incendie (1) concerné après l'atteinte de l'élément de protection contre l'incendie (1) et le placement du véhicule sans conducteur (2) à la position de vérification (xᵢ, yᵢ, zᵢ) associée à l'élément de protection contre l'incendie (1) concerné.

8. Véhicule sans conducteur (2) selon la revendication précédente 7, **caractérisé en ce que** la première unité d'émission et/ou de réception de signaux (6) ou une autre unité d'émission et/ou de réception de signaux (6a) sont conçues et/ou configurées pour recevoir le signal d'identification d'un moyen d'identification radioélectrique (9), en particulier d'une étiquette NFC ou d'une étiquette RFID de l'élément de protection contre l'incendie (1).

9. Véhicule sans conducteur (2) selon l'une quelconque des revendications précédentes 7 à 8, **caractérisé en ce que**
le véhicule sans conducteur (2) est conçu et/ou configuré pour générer un signal d'activation (S_{A}), en particulier lorsque le véhicule sans conducteur (2) atteint l'élément de protection contre l'incendie (1) concerné et/ou la position de vérification (xᵢ, yᵢ, zᵢ) associée ; et
le véhicule sans conducteur (2) est conçu et/ou configuré pour activer la vérification de l'élément de protection contre l'incendie concerné lorsque et/ou aussitôt que le signal d'activation (S_{A}) est généré.

10. Véhicule sans conducteur (2) selon l'une quelconque des revendications précédentes 7 à 9, **caractérisé en ce que**
le dispositif de vérification (20) comprend un dispositif d'acquisition d'images (15) qui est conçu et/ou configuré pour l'acquisition d'une image et pour la génération de données d'image (S_{pic}) correspondantes d'un élément de protection contre l'incendie (1) atteint au préalable ; et de préférence le dispositif de vérification (20) est conçu et/ou configuré pour la détermination d'une fonctionnalité de l'élément de protection contre l'incendie (1) sur la base des données d'image (S_{pic}).

11. Véhicule sans conducteur (2) selon l'une quelconque des revendications précédentes 7 à 10, **caractérisé en ce que**
le dispositif de vérification (20) comprend un dispositif de test (60) pour la génération d'une grandeur caractéristique de test (KT) ;
le dispositif de test (60) comprend une sortie de grandeur caractéristique de test (66) pour une sortie de la grandeur caractéristique de test (KT) ;
le dispositif de test (60) comporte par exemple un générateur d'aérosol (61), un générateur de gaz (62), une source de rayonnement (63), un générateur de chaleur (64) et/ou un générateur de signal de commande (65) ; et
le dispositif de test (60) est configuré et/ou conçu pour exécuter la vérification, pour générer une grandeur caractéristique de test (KT) qui, de préférence, peut être délivrée par la sortie de grandeur caractéristique de test (66).

12. Véhicule sans conducteur (2) selon la revendication 11, **caractérisé en ce que** le dispositif de test (60) comprend un dispositif d'orientation réglable en rotation, en pivotement et en longueur (68) au niveau duquel est placée la sortie de grandeur caractéristique de test (66), dans lequel le véhicule sans conducteur (2), en particulier le dispositif de test (60), est conçu et/ou configuré pour la commande du dispositif d'orientation (68) afin d'orienter la sortie de grandeur caractéristique de test (66), en particulier vers l'élément de protection contre l'incendie (1) concerné ou relativement à ce dernier et dans lequel, de manière plus préférée, la sortie de grandeur caractéristique de test (66) est placée au niveau d'une section finale, du côté opposé au véhicule (2), du dispositif d'orientation (68) .

13. Véhicule sans conducteur (2) selon l'une quelconque des revendications 11 à 12, **caractérisé en ce que** le véhicule sans conducteur (2) comprend un dispositif d'écran (81), dans lequel le dispositif d'écran (81) est conçu afin de former autour de l'élément de protection contre l'incendie (1) un volume de diffusion de grandeur caractéristique de test (82) défini.

14. Véhicule sans conducteur (2) selon la revendication 13, dans lequel lors de la conception du véhicule sans conducteur (2) en tant que drone, qui comprend des rotors (21), le dispositif d'écran (81) comprend une surface de projection (29) perpendiculaire aux axes de rotation des rotors (21), qui, vue dans la direction des axes de rotation des rotors (21), recouvre au moins en partie la surface recouverte par les rotors (21), et/ou
dans lequel le dispositif d'écran (81) comprend un premier élément d'écran (83) et un second élément d'écran (84), dans lequel le premier élément d'écran (83) est conçu pour former le volume défini de diffusion de grandeur caractéristique de test (82) défini,
et le second élément d'écran (83) comprend la surface de projection (29) perpendiculaire aux axes de rotation des rotors (21), qui, vue dans la direction des axes de rotation des rotors (21), recouvre au moins en partie la surface recouverte par les rotors (21).

15. Système de protection contre l'incendie, comprenant :
- une installation de protection contre l'incendie (11) ayant plusieurs éléments de protection contre l'incendie (1) ;
- un véhicule sans conducteur (2) selon l'une quelconque des revendications précédentes 7 à 14 ; et
- un autre dispositif, en particulier une centrale (12) et/ou un dispositif de commande à distance (30) ;
dans lequel le véhicule sans conducteur (2) est conçu et/ou configuré, pour exécuter un procédé de vérification de l'au moins un élément de protection contre l'incendie (1) de l'installation de protection contre l'incendie (11) selon une des revendications 1 à 6.
